(19) **Europäisches Patentamt / European Patent Office / Office européen des brevets**

(11) **EP 4 611 425 A1**

(12) # EUROPEAN PATENT APPLICATION
published in accordance with Art. 153(4) EPC

(43) Date of publication:
**03.09.2025 Bulletin 2025/36**

(21) Application number: **23920540.4**

(22) Date of filing: **10.02.2023**

(51) International Patent Classification (IPC):
*H04W 24/08* (2009.01)

(52) Cooperative Patent Classification (CPC):
**H04W 24/08**

(86) International application number:
**PCT/CN2023/075518**

(87) International publication number:
**WO 2024/164332 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
• **KONG, Lei**
  **Beijing 100102 (CN)**
• **ZHOU, Lei**
  **Beijing 100102 (CN)**

(74) Representative: **IPAZ**
**Bâtiment Platon**
**Parc Les Algorithmes**
**91190 Saint-Aubin (FR)**

(54) **CROSS-LINK INTERFERENCE MEASUREMENT METHOD AND APPARATUS, BASE STATION, AND CONTROLLER**

(57) The present application relates to the technical field of communications, and particularly, to a cross-link interference measurement method and apparatus, a base station, and a controller. The method comprises: an interference base station acquiring first configuration information of a measurement signal indicating a first position of the measurement signal on a time domain resource and a frequency domain resource, and sending, at the first position, the measurement signal to a victim base station on the basis of the first configuration information; and the victim base station receiving the measurement signal sent by the interference base station, and measuring a CLI value between the interference base station and the victim base station on the basis of the measurement signal. On the basis of the CLI value generated by the interference base station on the victim base station, the present application can acquire a corresponding CLI suppression technique, assist the time-frequency resource scheduling between the base stations, suppress CLI in F-TDD communication systems, and reduce the influence of CLI on the performance of 5G communication systems.

```
┌─────────────────────────────────────────────────────┐      S21
│  Receiving a measurement signal transmitted by an    │
│            aggressor base station                    │
└─────────────────────────────────────────────────────┘
                          │
                          ▼
┌─────────────────────────────────────────────────────┐      S22
│  Measuring, based on the measurement signal, a CLI   │
│  value between the aggressor base station and the    │
│              victim base station                     │
└─────────────────────────────────────────────────────┘
```

FIG. 2

## Description

**Technical Field**

The present disclosure relates to the technical field of communications, in particular to a method and a device for measuring cross link interference, a base station and a controller.

**Background**

In the 5G communication system, there is cross link interference (CLI) between the base stations, and the CLI may affect the reception of the base station and user equipment (UE), resulting in a decreasing of signal-to-noise ratio and an increasing of bit error rate, finally affecting the overall performance of the 5G communication system. Therefore, it is necessary to take appropriate technologies to suppress the CLI in the flexible time division duplex (F-TDD) communication system and improve the performance of the F-TDD communication system.

**Summary**

The examples of the present disclosure aim at providing a method and a device for measuring cross link interference, a base station and a controller, to suppress the CLI in the F-TDD communication system and improve the performance of the F-TDD communication system.

In a first aspect, an example of the present disclosure provides a method for measuring cross link interference, applied to a victim base station, wherein the method includes:

receiving a measurement signal transmitted by an aggressor base station;

measuring, based on the measurement signal, a CLI value between the aggressor base station and the victim base station.

In a second aspect, an example of the present disclosure provides a cross link interference measurement method, applied to an aggressor base station, wherein the method includes:

acquiring first configuration information of the measurement signal, wherein the first configuration information indicates a first location of the measurement signal in time domain resource and frequency domain resource;

transmitting the measurement signal to the victim base station at the first location.

In a third aspect, an example of the present disclosure provides a method for measuring cross link interference, applied to a controller, wherein the method includes:

acquiring first configuration information of an aggressor base station, wherein the first configuration information indicates a first location of a measurement signal in the time domain resource and frequency domain resource, the measurement signal is used to measure a CLI value;

transmitting the first configuration information of the aggressor base station to a victim base station.

In a fourth aspect, an example of the present disclosure provides a device for measuring cross link interference, applied to a victim base station, and the device includes:

a first receiving unit, to receive a measurement signal transmitted by an aggressor base station;

a measurement unit, to measure, based on the measurement signal, a CLI value between the aggressor base station and the victim base station.

In a fifth aspect, an example of the present disclosure provides a device for measuring cross link interference, applied to an aggressor base station, and the device includes:

an acquiring unit, to acquire first configuration information of a measurement signal, wherein the first configuration information indicates a first location of the measurement signal in time domain resource and frequency domain resource;

a first transmission unit, to transmit the measurement signal to the victim base station at the first location.

In a sixth aspect, an example of the present disclosure provides a device for measuring cross link interference, applied to a controller, and the device includes:

an acquiring unit, to acquire first configuration information of an aggressor base station, wherein the first configuration information indicates a first location of a measurement signal in time domain resource and frequency domain resource, the measurement signal is used to measure a CLI value;

a first transmission unit, to transmit the first configuration information of the aggressor base station to a victim base station.

In a seventh aspect, an example of the disclosure provides a base station comprising a processor, a communications interface, a memory and a communication bus, wherein the processor, the communications interface, and the memory communicate with each other via the communication bus;

the memory is to store a computer program;

the processor is to carry out any of the methods of the first aspect or the second aspect when executing the program stored on the memory.

In an eighth aspect, an example of the disclosure provides a controller comprising a processor, a communications interface, a memory and a communication bus, wherein the processor, the communications interface, and the memory communicate with each other via the communication bus;

the memory is to store a computer program;

the processor is to carry out any of the methods of the third aspect when executing the program stored on the memory.

In a ninth aspect, an example of the present disclosure provides a computer readable storage medium having stored therein a computer program, when being executed by a processor, cause the processor to carry out any of the methods of the first aspect or the second aspect or the third aspect.

In the technical solutions provided by the examples of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

**Brief Description of the Drawings**

The drawings described herein are used to provide further understanding of the present disclosure, and form a part of the present disclosure. The schematic examples and description herein are used to explain the present disclosure and do not constitute improper limitations to the present disclosure.

FIG. 1 is a schematic diagram of different base stations in a two-layer network structure;

FIG. 2 is a first flow diagram of the method for measuring CLI provided by an example of the present disclosure;

FIG. 3 is a second flow diagram of the method for measuring CLI provided by an example of the present disclosure;

FIG. 4a is a schematic diagram of different base stations in the two-layer network structure provided by an example of the present disclosure;

FIG. 4b is a schematic diagram of the measurement signal configuration based on the two-layer network structure shown in FIG. 4a;

FIG. 5a is a first schematic diagram of the pattern of the measurement signal provided by an example of the present disclosure;

FIG. 5b is a second schematic diagram of the pattern of the measurement signal provided by an example of the present disclosure;

FIG. 6 is a schematic diagram of time domain resource allocation of CSI-IM signal provided by an example of the present disclosure;

FIG. 7a - FIG. 7c are schematic diagrams of three combinations of CSI-RS provided by an example of the present disclosure;

FIG. 8a - FIG. 8b are two schematic diagrams of the measurement signal configuration provided by an example of the present disclosure;

FIG. 9 is a first schematic diagram of UL unavailable resources provided by an example of the present disclosure;

FIG. 10 is a second schematic diagram of UL unavailable resources provided by an example of the present disclosure;

FIG. 11 is a third flow diagram of the method for measuring CLI provided by an example of the present disclosure;

FIG. 12 is a fourth flow diagram of the method for measuring CLI provided by an example of the present disclosure;

FIG. 13 is a first schematic structural diagram of the device for measuring CLI provided by an example of the present disclosure;

FIG. 14 is a second schematic structural diagram of the device for measuring CLI provided by an example of the present disclosure;

FIG. 15 is a third schematic structural diagram of the device for measuring CLI provided by an example of the present disclosure;

FIG. 16 is a schematic structural diagram of the base station provided by an example of the present disclosure;

FIG. 17 is a schematic structural diagram of the controller provided by an example of the present disclosure.

**Detailed Description**

In order to make objectives, technical solutions and advantages of the present disclosure more apparent, the present disclosure now will be described in detail with reference to the accompanying drawings and the detailed description. Obviously, the examples described are only some of the examples of the present disclosure instead of all the examples. All further examples obtained by those of ordinary skills in the art based on the examples herein without any creative efforts are within the scope of the present disclosure.

The expressions appearing in the examples of the present disclosure will be explained below.

Macro base station: a large base station, which needs to be mounted on an iron tower, generally has three sectors, omnidirectional coverage, and has large power, a wide coverage area, and carries a high number of users.

Micro base station: a small base station installed in a building or in a dense area, which is small in size, small in power, small in coverage area and carries a low number of users.

Victim base station: a base station that is interfered with in the flexible time division duplex (F-TDD) communication system. In the example of the present disclosure, the victim base station can be the next generation node base station (gNB) or the evolved node base station (eNB), etc.

Aggressor base station: a base station that interferes with the victim base station in the flexible time division duplex (F-TDD) communication system. In the example of the present disclosure, the aggressor base station can be gNB or eNB, etc.

At present, the Time Division Duplex (TDD) communication system works in a Half-Duplex (HD) mode for communication. In the HD mode, the frame structure is strictly divided into Down Link (DL) slot, Up Link (UL) slot and special (S) slot. The S slot can be used for DL, UL or Guard Period (GP). In order to improve the network throughput, more DL slots are usually configured in 5G commercial networks, which causes fewer UL slots, limited UL transmission rate, and leads to larger UL transmission delay, which is not conducive to ultra-reliability low latency communication (URLLC) services such as automatic control and control-to-control.

Flexible Time Division Duplex (F-TDD) communication system is a feasible technical solution to solve the above problem. F-TDD is also known as dynamic TDD, it can flexibly allocate UL slot and DL slot according to the service conditions of DL, so as to meet the requirements of dynamic business changes and improve the performance of 5G communication system. For the F-TDD communication system, there are two typical network deployment scenarios: one is a single-layer network structure, that is, all base stations in the network are of the same type, such as the macro base station or micro base station; the other is a two-layer network structure, wherein the first layer of the network is a macro base station, which is generally deployed outdoors, and the second layer is a micro base station, which is generally deployed indoors.

For the single-layer network, different base stations adopt a flexible frame structure; For the two-layer network, the macro base station can be configured as a DL-based frame structure. For example, the frame structure of five slots is DDDSU, wherein D represents a DL slot, S represents a special slot, and U represents a UL slot; the micro base station in the second layer can be configured as a flexible frame structure. For example, the frame structure of five slots is FFFFF, wherein F represents a flexible slot, and the micro base station in the second layer can also be configured as a UL-based main frame structure. For example, the frame structure of five slots is DSUUU, wherein D represents a DL slot, S represents a special slot, and U represents a UL slot.

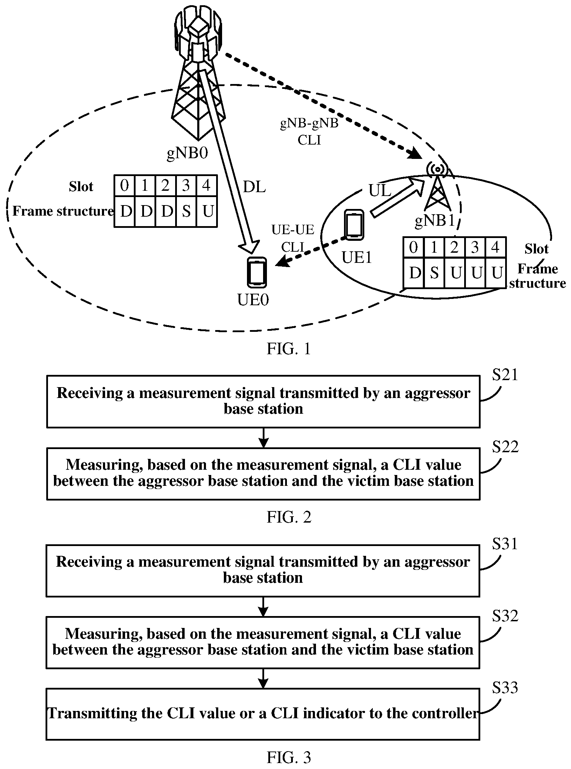

FIG. 1 shows the schematic diagram of different base stations in a two-layer network structure. Wherein the base stations include gNB0 and gNB1, gNB0 is a macro base station, the dotted circle represents the coverage range of gNB0, gNB1 is a micro base station, and the solid circle represents the coverage range of gNB1. In slots #0 - #4, the frame structure of gNB0 is DDDSU, and the frame structure of gNB1 is DSUUU. As shown in FIG. 1, in slot # 2, the transmission directions of the two base stations gNB0 and gNB1 are different. gNB0 sends DL data to UE0, and gNB1 receives UL data from UE1. In this case, the DL transmission of gNB0 may interfere with the UL reception of gNB1, that is, gNB-gNB CLI. The UL transmission of UE1 will interfere with the DL reception of UE0, that is, UE-UE CLI.

The above two kinds of CLIs may affect the reception of the base station and UE, reduce the received signal-to-noise ratio, increase the bit error rate, and finally affect the overall performance of the 5G communication system. Therefore, it is necessary to take appropriate technologies to suppress the CLI in the F-TDD communication system and improve the performance of the F-TDD communication system. Coordinated scheduling between gNBs is a feasible technology to suppress the CLI in the F-TDD communication system. However, the premise of cooperative scheduling is that various system configuration information needs to be exchanged between gNBs, including frame structure, bandwidth configuration, channel and signal configuration, measurement reports of mutual interference between base stations, and so on.

In order to achieve cooperative scheduling between base stations, suppress the CLI in the F-TDD communication system, and reduce the impact of the CLI on the performance of the 5G communication system, the examples of the present disclosure provide a method for measuring CLI. In this method, the aggressor base station sends a measurement signal to the victim base station, then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

The method for measuring CLI provided by the examples of the present invention is described in detail below in connection with a specific example.

See FIG. 2, which is a first flow diagram of the method for measuring CLI provided by the example of the present disclosure, the method is applied to a victim base station, the victim base station can correspond to one or more aggressor base stations, that is, one or more aggressor base stations interfere with the victim base station. The above method for measuring CLI includes the following blocks:

block S21, receiving a measurement signal transmitted by an aggressor base station;

block S22, measuring, based on the measurement signal, a CLI value between the aggressor base station and the victim base station.

In the method for measuring CLI provided by the example of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

In the above block S21, the measured signal can be an inherent signal transmitted by the aggressor base station or a non-inherent signal transmitted by the aggressor base station, and the measured signal can be a zero power signal transmitted by the aggressor base station or a non-zero power signal transmitted by the aggressor base station.

For example, the measured signal can be a synchronization signal block (SSB), wherein SSB is an inherent signal transmitted by the aggressor base station and is a non-zero power signal; the measured signal can also be a channel state information-interference measurement (CSI-IM) signal or a channel state information-reference signal (CSI-RS), wherein CSI-IM signal and CSI-RS are non-inherent signals sent by the aggressor base station, CSI-IM signal is a zero power signal, and CSI-RS is a non-zero power signal.

For SSB, SSB is a synchronization signal block that each base station must send to achieve synchronization between the base station and UE. Because SSB is universal and sent periodically, it can be used for CLI measurement between base stations. The aggressor base station sends SSB according to its inherent SSB configuration, while the victim base station measures the CLI value caused by SSB on the corresponding resources, such as synchronization signal-reference signal received power (SS-RSRP).

In the example of the present disclosure, the maximum number of SSB that can be configured for a single base station can be 64, which can be expanded as needed.

CSI-IM signal has been introduced in 3GPP Rel15 standard for interference measurement of UE. CSI-IM signal is regarded as a zero power CSI-RS, that is, ZP-CSI-RS. On the CSI-IM resource, the base station does not send any data. In this way, the UE on this resource can measure the interference of other base stations or other external signal sources to the UE. In the example of the present disclosure, in the F-TDD communication system, the CSI-IM signal is further expanded for measuring the CLI between base stations. Unlike the CSI-IM signal used for UE interference measurement, the CSI-IM signal in the example of the present disclosure needs to be specially designed for CLI measurement between base stations. In the example of the present disclosure, CSI-IM resources represent the time domain resource and frequency domain resource occupied by CSI-IM signal.

In the F-TDD communication system, user-specified CSI-RS can be used for time-frequency tracking, beam management, and user's CSI measurement. CSI-RS is further used for measuring the CLI between base stations. Unlike the CSI-IM signal, CSI-RS is configured as a non-zero power CSI-RS, that is, NZP-CSI-RS. In this way, the principle of measuring with CSI-RS will be different from CSI-IM. The victim base station directly measures the reference signal received power (RSRP) or received signal strength indicator (RSSI) of the CSI-RS on the CSI-RS resource according to the configuration of the CSI-RS of different base stations, thus obtaining the CLI value of the aggressor base station. For different base stations, the CSI-RS resource configuration can be different, that is, the CSI-RS of the base station can be configured on different time-frequency domain resources, so as to avoid the situation that the CLI cannot be accurately measured due to the CSI-RS interference between different base stations. In the example of the present disclosure, the CSI-RS resources represent the time domain resources and frequency domain resources occupied by CSI-RS.

In the example of the present disclosure, the measurement signal can also be realized by other inherent signal or non-inherent signal, which is not limited.

In the example of the present disclosure, there is no limit on the location of the measurement signal for a full duplex base station. For a half-duplex base station, in order to achieve CLI measurement and reporting, the measurement signal should be configured as much as possible in a downlink slot or a flexible slot of the aggressor base station, and the victim base station in this slot is the uplink slot or flexible slot. In one example, for a single-layer network structure, that is, two base stations are configured as flexible slots, so it is not possible to determine whether the signal is sent or received at the current time between base stations. In this case, the measurement signal can be configured in the intermediate slot in the frame structure; for the two-layer network structure, in response to determining that the frame structure of the two base stations has been clearly determined, a slot meeting the above conditions can be found, and then the measurement signal can be configured in the found slot, as shown in slot #2 in FIG. 1. This ensures that the victim base station can perform reception in response to determining that the aggressor base station is performing transmission, so that effective CLI measurement can be carried out.

In the above block S22, the CLI value can be expressed by reference signal received power (RSRP) or received signal strength indicator (RSSI).

After receiving the measurement signal transmitted by the aggressor base station, the victim base station measures the CLI value between the aggressor base station and the victim base station based on the measurement signal. For example, in response to determining that the measurement signal is a zero power signal, the victim base station measures the RSSI between the aggressor base station and the victim base station as the CLI value; in response to determining that the measurement signal is a non-zero power signal, the victim base station measures the RSRP between the aggressor base station and the victim base station as the CLI value.

After measuring the CLI value between the aggressor base station and the victim base station, the victim base station can communicate with the aggressor base station through the controller or directly with the aggressor base station to complete a coordinated scheduling between the aggressor base station and the victim base station, that is, coordinate the time-frequency resource scheduling between the aggressor base station and the victim base station, such as suspending the downlink channel or signal transmission of the aggressor base station, or reducing the transmission power of the downlink channel or signal, or notifying the victim base station to suspend UL scheduling. The specific scheduling strategy can be set according to the actual needs. The downlink channel or signal can include but not limited to DL shared channel (PDSCH), SSB, Physical Downlink Control Channel (PDCCH), CSI-RS, etc. The above controller can be any base station in the F-TDD communication system, a central unit (CU) in the F-TDD communication system, or other devices in the F-TDD communication system, which is not limited.

In some examples, as shown in FIG. 3, an example of the present disclosure also provides a method for measuring CLI, applied to a victim base station, and the method can include the following blocks:

block S31, receiving a measurement signal transmitted by an aggressor base station. The block is the same as the above block S21.

Block S32, measuring, based on the measurement signal, a CLI value between the aggressor base station and the victim base station. The block is the same as the above block S22.

Block S33 transmitting the CLI value or a CLI indicator to the controller, the CLI indicator is used to indicate whether there is the CLI between the victim base station and the aggressor base station.

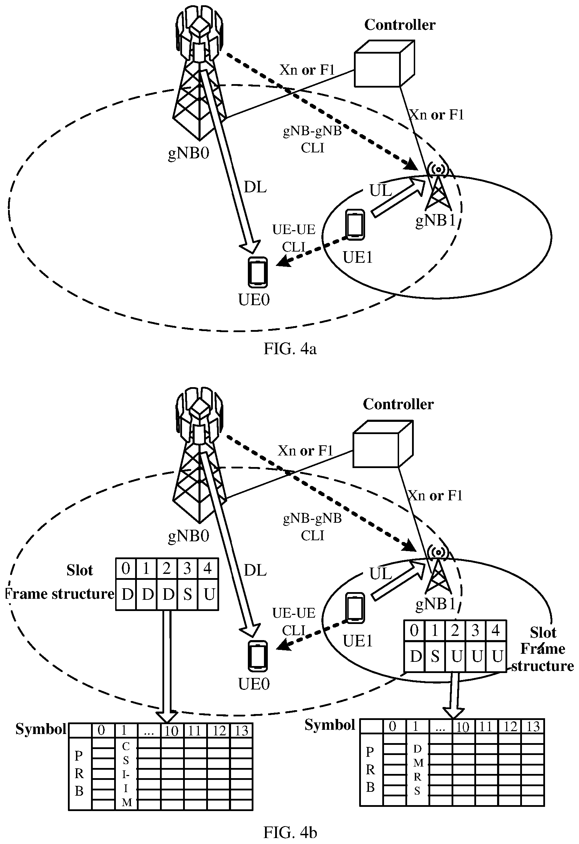

In the example of the present disclosure, a controller is added to the F-TDD communication system. As shown in FIG. 4a, the controller can be any base station in the F-TDD communication system, a central unit (CU) in the F-TDD communication system, or other devices in the F-TDD communication system, which is not limited.

After measuring the CLI value, the victim base station sends the CLI value or CLI indicator to the controller. Based on the CLI value or CLI indicator, the controller can complete the coordinated scheduling between the aggressor base station and the victim base station, that is, coordinate the time-frequency resource scheduling between the aggressor base station and the victim base station. The CLI indicator can be a first preset value or a second preset value. With the CLI indicator being the first preset value, it indicates that there is the CLI between the victim base station and the aggressor base station. With the CLI indicator being the second preset value, it indicates that there is no CLI between the victim base station and the aggressor base station. Wherein, the bit width of the first preset value and the second preset value can be 1, 2 or 3 bit (bit), etc., which is not limited. With the bit width of the first preset value and the second preset value being 1 bit, the first preset value can be 1 and the second preset value can be 0, or the first preset value can be 0 and the second preset value can be 1.

In some examples, the victim base station can determine whether the CLI value is greater than the preset CLI threshold after measuring the CLI value. In response to determining that the CLI value is greater than the preset CLI threshold, the victim base station can determine that the aggressor base station has seriously affected the communication quality of the victim base station, and send the CLI value to the controller, or send the CLI indicator to the controller indicating that there is the CLI between the victim base station and the aggressor base station, so as to coordinate the time-frequency resource scheduling between the aggressor base station and the victim base station.

Correspondingly, in response to determining that the CLI value is smaller than or equal to the preset CLI threshold, the victim base station can determine that the aggressor base station has minor impact on the communication quality of the victim base station, and refuse to send the CLI value to the controller, or refuse to send the CLI indicator to the controller indicating that there is a no CLI between the victim base station and the aggressor base station, thus saving network resources; at the same time, the controller does not need to coordinate the time-frequency resource scheduling between the aggressor base station and the victim base station, thus reducing the burden of the controller.

In the method for measuring CLI provided by the example of the present disclosure, the controller can realize the information transmission between the opposing aggressor base station and the victim base station, thus realizing the coordinated scheduling between the aggressor base station and the victim base station, further suppressing the CLI in the F-TDD communication system, and reducing the impact of the CLI on the performance of the 5G communication system.

In some examples, each base station in the F-TDD communication system sends its own configuration information to the controller. When measuring the CLI, the controller determines the aggressor base station of the victim base station and sends the configuration information of the aggressor base station to the victim base station. The configuration information of the victim base station indicates a location of the measurement signal in the time domain resource and frequency domain resource, that is, the configuration information of the victim base station is the configuration information of the measurement signal. For the convenience of description, the configuration information of the victim base station is subsequently referred to as first configuration information. In the victim base station, the location of the measurement signal in the time domain resource and frequency domain resource is referred to as a first location. The victim base station receives the first configuration information sent by the controller. In this case, the above block S21 can comprise: determining, according to a carrier correspondence between the aggressor base station and the victim base station, a second location corresponding to the first location in the time domain resource and frequency domain resource in the victim base station; receiving a measurement signal at the second location. The measurement signal at the second location is a measurement signal transmitted by the aggressor base station for measuring the CLI.

In the example of the present disclosure, the victim base station can accurately receive the measurement signal through the first configuration information, and then accurately measure the CLI value, so that the controller can accurately coordinate the scheduling between the aggressor base station and the victim base station, and suppress the CLI in the F-TDD communication system.

In order to ensure the CLI measurement of the base station, the controller can also send the necessary configuration information to the victim base station, wherein the necessary configuration information can include but not limited to frame structure configuration information, bandwidth part (BWP) configuration information, CLI report configuration information, beam management information, channel and signal time-frequency resource configuration information, etc. The channel and signal can include SSB, PDCCH, PDSCH, CSI-RS, Physical Uplink Control Channel (PUCCH), Physical Uplink Shared Channel (PUSCH), Physical Random Access Channel (PRACH), Sounding Reference Signal (SRS), etc.

In practical applications, the roles of the victim base station and the aggressor base station will be changed. In order to improve the efficiency of CLI measurement, the controller can send the first configuration information and necessary configuration information of each base station to each base station to complete the exchange of configuration information between the base stations. The above configuration information can be exchanged through the backhaul link between the base station and the controller (such as Xn interface or F1 interface) or over-the-air technology (OTA).

In some examples, in response to determining that the measurement signal is the inherent signal of the aggressor base station, the controller sends the first configuration information of the aggressor base station to the victim base station. After the first configuration information is received by the victim base station, the first configuration information is activated immediately, that is, the first configuration information becomes effective.

In response to determining that the measurement signal is a non-inherent signal of the aggressor base station, the first configuration information can be divided into periodic configuration information, semi-persistent configuration information, aperiodic configuration information and other types of configuration information. The victim base station can activate different types of first configuration information according to actual needs.

For example, in response to determining that the first configuration information is periodic configuration information, the controller sends the first configuration information of the aggressor base station to the victim base station. After receiving the first configuration information, the victim base station immediately activates the first configuration information, that is, the first configuration information becomes effective.

In response to determining that the first configuration information is semi-persistent configuration information, the controller sends the first configuration information of the aggressor base station to the victim base station; after receiving the first configuration information, the victim base station stores the first configuration information and does not activate the first configuration information, that is, the first configuration information is not effective temporarily; after the victim base station receives activation time sent by the controller, the victim base station may activate the first configuration information again in response to determining that the activation time is reached.

In response to determining that the first configuration information is aperiodic, the controller generates the corresponding first configuration information in response to determining that the victim base station detects the CLI, and sends the first configuration information and activation time to the victim base station and the aggressor base station; after receiving the first configuration information and the activation time sent by the controller, the victim base station and the aggressor base station may activate the first configuration information at the activation time again.

For example, in response to determining that the CLI is detected in a slot (such as the first slot), the victim base station sends a notification message to the controller, the notification message indicates that there is the CLI in the first slot; the controller detects whether the first configuration information for the first slot exists in the aggressor base station; in response to determining that the first configuration information for the first slot does not exist in the aggressor base station, the controller can configure the CSI-IM resource or CSI-RS resource, that is, the first configuration information, for the aggressor base station according to the frame structure configuration information of the aggressor base station, the bandwidth part (BWP) configuration information, the CLI report configuration information, the beam management information, the time-frequency resource configuration information of the channel and the signal, and the first slot with interference, and send the first configuration information and activation time for the first slot to the victim base station and the aggressor base station; in response to determining that the first configuration information for the first slot exists in the aggressor base station, the controller can send the activation time of the first configuration information for the first slot to the victim base station and the aggressor base station.

The victim base station receives the activation time of the first configuration information for the first slot sent by the controller, or receives the first configuration information and activation time for the first slot sent by the controller; in response to determining that the activation time is reached, activating the first configuration information for the first slot.

In some examples, the measurement signal is a non-inherent of the aggressor base station, and the measurement signal is a zero power signal. In this case, the victim base station can determine the CLI value through RSSI. The CLI measurement principle is described below in combination with the measurement signal configuration shown in FIG. 4b. In FIG. 4b, the CSI-IM signal is a measurement signal, and the symbol #1 of the slot #2 of the aggressor base station gNB0 is configured with the CSI-IM signal, the symbol 1 of the slot #2 of the victim base station gNB1 is configured with the UL demodulation reference signal (DMRS), that is, the symbol #1 of slot #2 is the first location of the measurement signal in the time domain resource and frequency domain resource. Based on FIG. 4b, the CLI measurement principle is:

The signals received by gNB1 at symbol #1 of slot #2 are DMRS and other signals except the interference signals of gNB0, such as other interference and thermal noise. At this time, the total RSSI received by gNB1 can be expressed as the following formula (1):

$$RSSI_{Total,1} = N_{DMRS} * RSRP_{DMRS} + RSSI_{Others} \quad (1)$$

In formula (1), $RSSI_{Total,1}$ represents the sum of RSSI of all CSI-IM resource elements (RE) on the CSI-IM symbol. The CSI-IM symbol is a symbol for transmitting CSI-IM signals, that is, the symbol #1 of the above slot #2, $RSSI_{Total,1}$ can be measured by gNB1, CSI-IM RE is the RE for transmitting CSI-IM signals, $N_{DMRS}$ represents the number of RE occupied in the DMRS symbol, and the DMRS symbol is a symbol for transmitting UL DMRS, that is, the symbol #1 of the above slot # 2, $RSRP_{DMRS}$ represents the linear average value of RSRP of all DMRS RE, DMRS RE is the RE that transmits UL DMRS, $RSRP_{DMRS}$ can be estimated by UL DMRS; $RSSI_{Others}$ represents the sum of RSSI of other signals in the DMRS symbol except the interference signal of gNB0.

In the other symbols in slot #2 except for symbol #1, the signals received by gNB1 include the interference generated by the DL signals of PUSCH, gNB0 and other signals except the interference signals of gNB0. At this time, the total RSSI received by gNB1 can be expressed as the following formula (2):

$$RSSI_{Total} = N_{PUSCH} * RSRP_{PUSCH} + RSSI_{Others} + RSSI_{CLI,gNB0} \quad (2)$$

In formula (2), $RSSI_{Total}$ represents the sum of RSSI of all REs on a single PUSCH symbol, the PUSCH symbol is a symbol for transmitting PUSCH, that is, the symbol in the above slot #2 except for symbol #1, $RSSI_{Total}$ can be measured by gNB1, $N_{PUSCH}$ represents the number of RE occupied in the PUSCH symbol, $RSRP_{PUSCH}$ represents the linear average value of RSRP on all PUSCH RE, and PUSCH RE is the RE for transmitting PUSCH, $RSRP_{PUSCH}$ can be derived from $RSRP_{DMRS}$ according to the relationship between the transmission power of PUSCH and UL DMRS, that is, $RSRP_{PUSCH}$ can be expressed as $RSRP_{PUSCH} = \alpha * RSRP_{DMRS}$, $\alpha = 1, 1/2, 1/3$, which represents the ratio of energy per resource element (EPRE) of PUSCH to EPRE of UL DMRS; $RSSI_{Others}$ represents the sum of RSSI of other signals except the interference signal of gNB0, $RSSI_{CLI,gNB0}$ represents the RSSI of interference generated by the DL signal of gNB0, $RSSI_{CLI,gNB0}$ can be calculated according to formula (1) and formula (2), which can be expressed as the following formula (3):

$$RSSI_{CLI,gNB0} = RSSI_{Total} - RSSI_{Total,1} + (N_{DMRS} - \alpha * N_{PUSCH}) * RSRP_{DMRS} \quad (3)$$

In general, the transmission powers on the DMRS symbol and the PUSCH symbol are the same, that is, $N_{DMRS} - \alpha * N_{PUSCH} = 0$, therefore, the formula (3) of $RSSI_{CLI,gNB0}$ can be simplified as the following formula (4):

$$RSSI_{CLI,gNB0} = RSSI_{Total} - RSSI_{Total,1} \quad (4)$$

Based on the above CLI measurement principle, the above block S22 can be:

in response to determining that there are multiple aggressor base stations, and first locations of measurement signals in the time domain resource and frequency domain resource in all the aggressor base stations are different, measuring respectively a CLI value between each aggressor base station and the victim base station based on the measurement signal transmitted by each aggressor base station;

in response to determining that there are multiple aggressor base stations, and first locations of measurement signals in the time domain resource and frequency domain resource in a part of the aggressor base stations are the same, measuring respectively a CLI value between each of aggressor base stations with different first locations and the victim base station, and a total CLI value between the part of the aggressor base stations with the same first locations and the victim base station, based on the measurement signal transmitted by each aggressor base station;

in response to determining that there are multiple aggressor base stations, and first locations of measurement signals in the time domain resource and frequency domain resource in the multiple aggressor base stations are the same, measuring a total CLI value between the multiple aggressor base stations and the victim base station based on the measurement signal transmitted by each aggressor base station;

in response to determining that there is one aggressor base station, measuring the CLI value between this aggressor base station and the victim base station based on the measurement signal transmitted by this aggressor base station.

In the case of multiple aggressor base stations, that is, many-to-one, in response to determining that the locations of CSI-IM resources of all the aggressor base stations are different, the victim base station can easily extend the CLI measurement principle of the single aggressor base station to multiple aggressor base stations. In response to determining that UL DMRS can be correctly received and its RSRP can be estimated, the victim base station can easily estimate the CLI value of each aggressor base station, that is, the above $RSSI_{CLI,GNB0}$. However, in response to determining that the CSI-IM configuration of multiple aggressor base stations is the same, the victim base station can only estimate the total CLI value it received.

In the actual F-TDD communication system, there may also be situations where one aggressor base station interferes with multiple victim base stations, that is, one-to-many, or multiple aggressor base stations interfere with multiple victim base stations, that is, many-to-many. As long as the configuration information is exchanged between different base stations, the interference measurement between different base stations can be realized, and the measurement principle is the same as the above method.

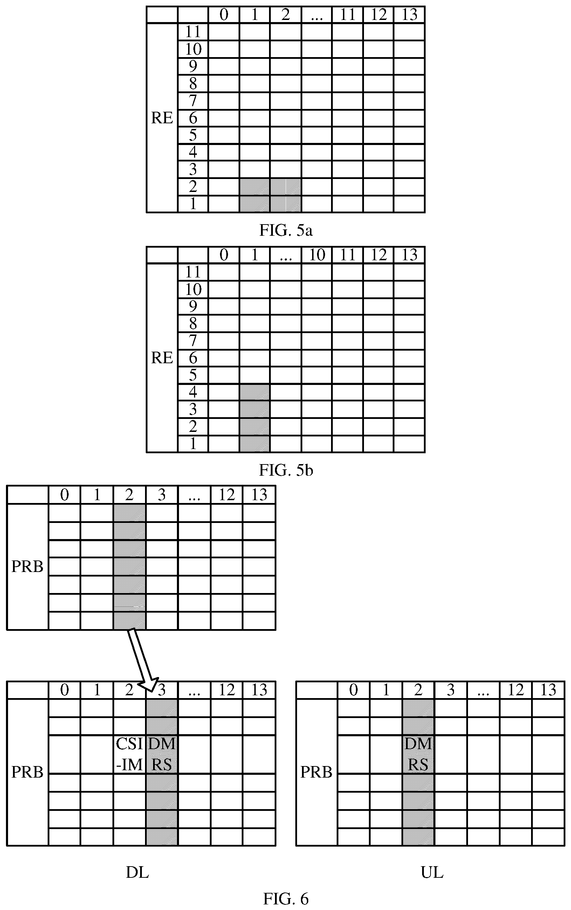

In the example of the present disclosure, for the measurement signal with zero power and non-inherent signal, patterns of the measurement signal can include a first pattern (pattern0) and a second pattern (pattern1); in the first pattern, the measurement signal occupies two consecutive symbols in the time domain resource and occupies two consecutive resource elements (RE) in each physical resource block in the frequency domain resource, as shown in the schematic diagram of pattern0 in FIG. 5a, the filled box is the RE of the measurement signal; in the second pattern, the measurement signal occupies one symbol in the time domain resource and four consecutive resource elements in each physical resource block in the frequency domain resource, as shown in the schematic diagram of pattern1 in FIG. 5b, the filled box is the RE of the measurement signal.

For the measurement signal with zero power and non-inherent signal, the configuration modes on a certain slot include the following two modes:

Mode 1: a symbol occupied by the measurement signal in the aggressor base station is the same as the symbol occupied by the UL DMRS configured by the victim base station, that is, the symbol indicated by the first location in the victim base station is the same as that occupied by the UL DMRS.

In mode 1, the measurement signal is configured at the location of UL DMRS, which coincides with the location of UL DMRS. Since there is no power transmission on the measurement signal resources, the detection performance of DMRS can be improved.

For single-symbol DMRS, the measurement signal adopts pattern1, as shown in FIG. 5b; for dual-symbol DMRS, the measurement signal adopts pattern0, as shown in FIG. 5b.

In mode 1, there is the situation that the location of the measurement signal coincides with the location of other downlink data in the aggressor base station, such as the location of the measurement signal coincides with the location of DL DMRS or PDCCH of the aggressor base station. In response to determining that the location of UL DMRS of the victim base station coincides with the location of DL DMRS of the aggressor base station, the location of the measurement signal may also coincide with the location of DL DMRS of the aggressor base station Without DL DMRS, the aggressor base station may not be able to transmit DL data normally. In response to determining that the location of UL DMRS of the victim base station coincides with the location of PDCCH of the aggressor base station, then configuring the measurement signal at this location on the DL slot of the aggressor base station will conflict with the PDCCH.

In order to avoid the above problem, in the example of the present disclosure, other symbols are used for other downlink data that occupy with the symbols indicated by the first location in the aggressor base station, so as to avoid conflicts with CSI-IM. For example, the victim base station moves the location of DL DMRS backward by one symbol. At this time, PDSCH should not perform rate matching on the measurement signal. FIG. 6 shows a schematic diagram of time domain resource allocation of a CSI-IM signal, wherein DMRS is a single-symbol DMRS. In FIG. 6, the location of CSI-IM signal coincides with the location of UL DMRS, both of which are symbols # 2; the location of the original DL DMRS is in symbol #2. In order to avoid conflicts with CSI-IM signals, the location of DL DMRS is delayed by one symbol, that is, DL DMRS is configured in symbol #3. For another example, UL DMRS is in symbol #0, and the corresponding CSI-IM signal is configured in symbol #0. At this time, PDCCH no longer uses this symbol #0, but can use symbol #1 or symbol #2.

In order to avoid the above problems, in the example of the present disclosure, the UL DMRS location can also be configured as a different symbol from DL DMRS in the victim base station, so that the symbol occupied by the measurement signal in the aggressor base station is different from DL DMRS. For example, the victim base station moves the location of UL DMRS backward by one symbol to avoid conflicts with DL DMRS.

In the example of the present disclosure, the measurement signal and UL DMRS are configured in the same symbol, and no other data transmission is performed on the symbol occupied by CSI-IM signal. In the case of multiple aggressor base stations, the victim base station can only estimate the total RSSI value of the CLI between all aggressor base stations and the victim base station, and cannot accurately measure the CLI value of a certain aggressor base station. In response to determining that there is only one aggressor base station, the measured RSSI value of the CLI is the CLI value of the aggressor base station to the victim base station.

Mode 2: the symbol occupied by the measurement signal in the aggressor base station is different from the symbol occupied by the UL DMRS configured by the victim base station, that is, the symbol indicated by the first location in the victim base station is different from the symbol occupied by the UL DMRS.

In mode 2, the measurement signal can be configured in any symbol of the slot. In mode 2, in order to simplify the complexity of the configuration, the symbol indicated by the first location in the aggressor base station is different from the symbol occupied by other downlink data. For example, the configuration of the measurement signal avoids the location of PDCCH, DL DMRS and other channels and signals. At this time, the measurement signals of different aggressor base stations can be configured in the same time-frequency resource or in different time-frequency resources. In response to determining that measurement signals of different aggressor base stations are configured at the same location, the victim base station can only estimate the total RSSI value of the CLI between all aggressor base stations and the victim base station, and cannot accurately measure the CLI value of a certain aggressor base station; in response to determining that the measurement signals of different aggressor base stations are configured at different locations, the victim base station can estimate the CLI value between the different aggressor base stations and the victim base station, and feedback the CLI value to the different aggressor base stations, thus completing the cooperative scheduling between the base stations. In the above both modes, rate matching can be performed around the time-frequency resources of the measurement signal, such as PDSCH rate matching.

In the example of the present disclosure, for the measurement signal of non-zero power and non-inherent signal, the above block S22 can be: measuring respectively the CLI value between each aggressor base station and the victim base station based on the measurement signal transmitted by each aggressor base station.

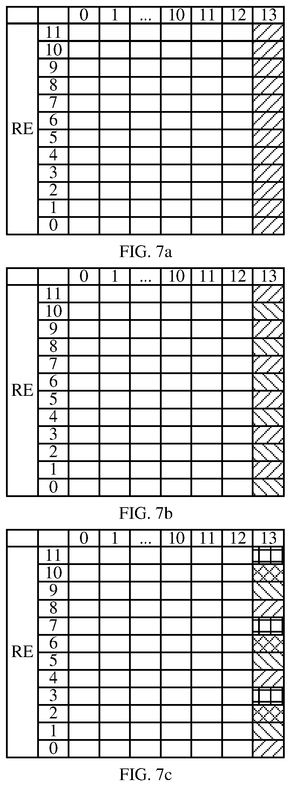

For the measurement signal with non-zero power and non-inherent signal, the measurement signal can occupy a consecutive second preset number of REs every first preset number of REs on the symbol occupied by the measurement signal in the time domain resource. The first preset number and the second preset number can be set according to the actual needs. For example, the first preset number can be 1, 2, 4, 6, 12 or 24, and the second preset number can be 1, 2 or 3, etc. Take the second preset number of 1 as an example, as shown in an example of time domain resource configuration of CSI-RS in FIG. 7a - FIG. 7c. FIG. 7a - FIG. 7c shows three combinations (comb). In the Comb shown in FIG. 7a, different fillings represent different CSI-RS. It can be seen that all frequency domain resources in one symbol #13 are used for CSI-RS. In response to determining that multiple CSI-RS resources for measuring CLI are configured, multiple symbols in time domain resources need to be occupied. In the Comb shown in Fig. 7b, different fillings represent different CSI-RSs. It can be seen that two CSI-RSs are configured in symbol #13. At this time, two CSI-RSs of the same aggressor base station can be configured on the same time domain symbol, or CSI-RSs of different aggressor base stations can be configured in the same symbol, and different CSI-RSs occupy different RE resources. Compared with Comb shown in Fig. 7a, the resource utilization rate of the Comb shown in FIG. 7b has doubled.

In the Comb shown in FIG. 7c, different fillings represent different CSI-RSs. It can be seen that four CSI-RSs are configured in symbol #13. Compared with the Comb shown in FIG. 7a, the resource utilization rate of the Comb shown in Fig. 7c has increased by three times; Compared with the Comb shown in FIG. 7b, the resource utilization rate of the Comb shown in FIG. 7c has doubled.

For different CSI-RSs, the initial locations of their time domain resources and frequency domain resources can be indicated by specific signaling, the time domain resources of CSI-RS are indicated by the combination of slot, start symbol and symbol length, the frequency domain start location is indicated by the combination of physical resource block (PRB) start location, PRB length and RE offset. For example, in FIG. 7a - FIG. 7c, the starting symbol of all CSI-RS resources of different Combs is 13, and the symbol length is 1. For the CSI-RS resources in the Comb shown in FIG. 7a, RE offset=0; for the CSI-RS resources in the Comb shown in FIG. 7b that are slanted left and slanted right, the RE offsets are 0 and 1 respectively; in the Comb shown in FIG. 7c, the RE offsets of the four CSI-RS resources are 0, 1, 2 and 3 respectively.

In response to determining that one victim base station has only one aggressor base station, the CSI-RS resources of Comb shown in FIG. 7b and FIG. 7c only occupy 1/2 and 1/4 of the RE resources in one PRB. In order to improve the resource utilization rate, the remaining RE resources in the aggressor base station can be used for the transmission of other downlink data, such as PDSCH transmission, which can be completed through rate matching.

In response to determining that one victim base station has many aggressor base stations, such as two aggressor base stations, then the two aggressor base stations can be configured with the CSI-RS resources of the Comb as shown in FIG. 7b. At this time, for a single aggressor base station, in response to determining that the aggressor base station sends a downlink channel or other signal, such as PDSCH, on the CSI-RS resource of another aggressor base station, it may affect the CSI-RS detection, thus affecting the accuracy of the CLI measurement by the victim base station. In order to improve the accuracy of the CLI measurement by the victim base station, on a single aggressor base station, it is necessary to avoid scheduling downlink channels or other signals on the CSI-RS resources of other aggressor base stations.

In an example of the present disclosure, for the measurement signal used for the CLI measurement of the base station, the measurement signal is a non-inherent signal, such as the CSI-IM signal or CSI-RS signal. In response to determining that there are many aggressor base stations, the configuration information of the measurement signal in the victim base station is a set of the first configuration information of multiple aggressor base stations.

Specifically, each aggressor base station can be configured with one or more base station level measurement signal resource sets, such as M, whose value can be 1, 2, 4, 8, 16 or 32, etc. Each measurement signal resource set can include K measurement signal resources, $K \geq 1$. For the victim base station, it is necessary to configure the measurement signal resource for itself according to the measurement signal resource configuration of all aggressor base stations, that is, the measurement signal resource of the victim base station is a set of the measurement signal configuration of all aggressor base stations that interfere with it.

For the measurement signal resources of different aggressor base stations, a variety of measurement signal configuration schemes can be adopted: a resource configuration with different measurement signals, a resource configuration with the same measurement signal, and a resource configuration that some of the measurement signals are the same. That is, the first locations of the measurement signals in the time domain resource and frequency domain resource in each aggressor base station are the same or different.

In response to determining that the measurement signal is a zero power signal, such as CSI-IM signal, for resource configuration with different CSI-IMs, the victim base station can estimate the CLI value between each aggressor base station and the victim base station according to the resource configuration with different CSI-IMs; for the resource configuration that some of the measurement signals are the same, the victim base station can estimate the CLI value between an aggressor base station with separate CSI-IM resource configuration and the victim base station; for the resource configuration with the same measurement signal, the victim base station can estimate the total CLI value between all aggressor base stations and the victim base station, but cannot determine the CLI value between each aggressor base station and the victim base station.

In response to determining that the measurement signal is a non-zero power signal and a non-inherent signal, such as CSI-RS, for resource configuration with different CSI-RSs, resource configuration with the same CSI-RS, or resource configuration that some of the CSI-RSs are the same, the victim base station can estimate the CLI value between each aggressor base station and the victim base station according to the CSI-RS resource configuration of each aggressor base station.

For each measurement signal resource set, in order to identify this measurement signal belongs to measurement signal resource of which base station, a separate resource identifier (ID) can be introduced for the measurement signal resource set, the ID can be expressed in the form of Physical Cell ID+Resource Set ID, wherein the Physical Cell ID represents this measurement signal belongs to which base station, and Resource Set ID represents a specific measurement signal resource set in this base station. For the measurement signal resources in each measurement signal resource set, each measurement signal resource has a separate ID, such as Resource ID. In this way, the victim base station can identify the measurement signal resources through Physical Cell ID, Resource Set ID and Resource ID.

In response to determining that the measurement signal is a non-inherent signal, there can be one or more ports configured for the measurement signal used for CLI measurement. In the time domain, the measurement signal can occupy one or more symbols, such as two or four symbols. In the frequency domain, the number of PRBs occupied by the measurement signal can be flexibly configured according to the bandwidth range needed for measuring the CLI. Alternatively, in the frequency domain, the index of PRB at the starting location of the measurement signal can be divided by 4. The minimum number of PRB occupied by the measurement signal is 24, and it needs to be configured as a multiple of 4. The index of PRB at the starting location is the number of the starting PRB. The frequency domain resource configurations of the measurement signal can be divided into the following two cases:

In case 1, the bandwidth of the aggressor base station is greater than that of the victim base station. In this case, the frequency domain range of the measurement signal in the symbol indicated by the first location is all PRBs covering the carrier of the victim base station, that is, the starting physical resource block (PRB) of the measurement signal in the symbol indicated by the first location is the carrier starting point of the victim base station, and the size of the measurement signal is equal to the bandwidth of the victim base station. Alternatively, the serial number of the starting physical resource block (PRB) of the measurement signal in the symbol indicated by the first location is the minimum value that is greater than the carrier starting point of the victim base station and is divisible by 4, and the size of the measurement signal is the maximum value that is smaller than or equal to the bandwidth of the victim base station and is divisible by 4.

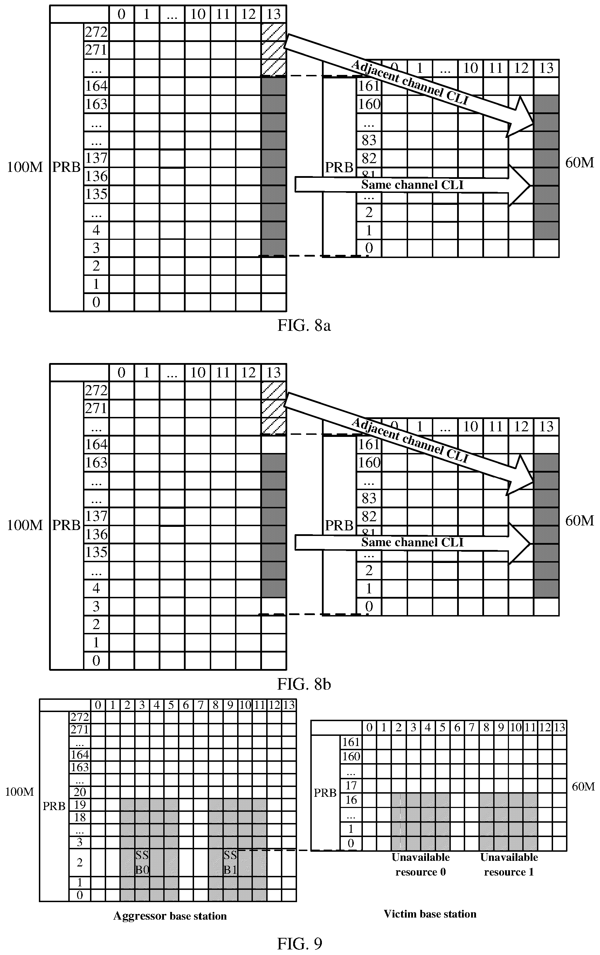

For example, FIG. 8a and FIG. 8b show the two schematic diagrams of the measurement signal configuration. In FIG. 8a and FIG. 8b, the carrier bandwidth of the aggressor base station and the victim base station is not the same, in which the sub-carrier space (SCS) of the aggressor base station and the victim base station is 30 KHz, the carrier bandwidth of the aggressor base station is 100 MHz, including 273 PRBs, and the carrier bandwidth of the victim base station is 60 MHz, including 162 PRBs. The carrier of the victim base station is mapped into PRB3-PRB164 of the aggressor base station. In order to enable the victim base station to measure the CLI interference, Figure 8a configures the measurement signal in the PRB3-PRB164 of the aggressor base station, its initial PRB is PRB3, and the size of the measurement signal is 162PRB; FIG. 8b configures the measurement signal in the PRB4-PRB163 of the aggressor base station, its initial PRB is PRB4, and the size of the measurement signal is 160PRB, as shown in the PRB filled with gray in FIG. 8a and FIG. 8b, which is used for the victim base station to measure the same channel CLI. Outside the carrier range of the victim base station, the aggressor base station is configured with one additional CSI-RS resource for the victim base station to measure the adjacent channel CLI, as shown in slanted filled PRB in FIG. 8a and FIG. 8b.

In case 2, the bandwidth of the aggressor base station is smaller than or equal to that of the victim base station. In this case, the measurement signal in the symbol indicated by the first location occupies all PRBs within the bandwidth range of the aggressor base station.

In the example of the present disclosure, measurement signals are configured within the entire bandwidth range of the aggressor base station. In order to enable the victim base station to measure the interference from the entire carrier of the aggressor base station, the aggressor base station can configure the measurement signal resource on the entire bandwidth, that is, the initial PRB is PRB0, the number of PRB is Ceil (B/4)*4, B represents the total number of PRBs in the bandwidth of the aggressor base station, and Ceil () represents the rounding up to an integer. In response to determining that the number of PRBs of the measurement signal resource configuration exceeds the bandwidth range, the victim base station considers that the measurement signals occupy the entire bandwidth of the aggressor base station. For the victim base station, the victim base station can measure the same channel CLI interference within the frequency domain resource that coincides with the aggressor base station; In the frequency domain resource that does not coincide with the aggressor base station, the victim base station can measure the adjacent channel CLI interference.

In some examples, in response to determining that the measurement signal is a non-zero power signal, such as the SSB and CSI-RS described above, the method for measuring CLI described above can also include setting a location of the measurement signal in the time domain resource and frequency domain resource in the victim base station as a UL unavailable resource.

On the side of the victim base station, the time-frequency resource with the same location as the measurement signal of the aggressor base station is not used for the transmission of any UL data, that is, the victim base station avoids the location of the measurement signal of the aggressor base station when scheduling PUSCH, PUCCH, SRS or PRACH. In an example of the present disclosure, the victim base station determines the location of the measurement signal and sets time-frequency resources that coincide with the measurement signal as UL unavailable resources.

FIG. 9 shows a schematic diagram of UL unavailable resources that coincide with the locations of SSB signal, the carrier bandwidth of the aggressor base station is 100MHz, including 273 PRBs, and the carrier bandwidth of the victim base station is 60MHz, including 162 PRBs. The values of 0-13 in the first row represent time domain symbols, and the values of 0-272 and 0-161 in the second column on the left side of the aggressor base station and the victim base station represent serial numbers of PRBs. The aggressor base station is configured with two SSBs in one slot, namely SSB0 and SSB1, as the gray filled part of the left figure in FIG. 9, which located in symbols #2 to #5 and #8 to #11 respectively, occupying PRB 0-19 in the frequency domain. According to the carrier correspondence between the aggressor base station and the victim base station, it can be determined that UL unavailable resources in the same slot in the victim base station, which is the gray filled part in the right figure shown in FIG. 9. The location of the UL unavailable resources in the time domain is consistent with the location of the SSB signal of the aggressor base station. In the frequency domain, the locations of the UL unavailable resources are PRB #0 to #16, a total of 17 PRBs.

For uplink data such as PRACH, PUCCH and SRS, the victim base station avoids the above UL unavailable resources when scheduling, such as using PRB or symbols other than the UL unavailable resources to transmit other uplink data, such as using PRB #17 to #161 on all symbols, or using all PRBs on symbols #0, #1, #6, #7, #12, and #13 in FIG. 9 to transmit uplink data.

For other uplink data that supports rate matching, such as PUSCH, the victim base station can use the following two methods to avoid the UL unavailable resources: one is to use PRB or symbols other than the UL unavailable resources; the other is to perform PRB-level rate matching around the UL unavailable resources.

In some examples, the measurement signal can also be an inherent signal of the aggressor base station, such as the SSB signal mentioned above. In this case, the victim base station can send configuration information of UL unavailable resources, that is, second configuration information, to the UE served by the victim base station through the system information block (SIB) or specific radio resource control (RRC) signaling, the second configuration information can include: a location of a first frame where the measurement signal is located, configuration information and scheduling information of the measurement signal in the time domain resource and frequency domain resource. The scheduling information instructs the UE to use PRB or symbols other than UL unavailable resources to transmit uplink data; or, the scheduling information instructs the UE to perform rate matching for other uplink data around the UL unavailable resources, and transmit the other uplink data subjected to rate matching.

Since the measurement signal, which is an inherent signal, is located in the front slot of each frame, but the length of a frame is 10 milliseconds (ms), and the period of the measurement signal which is an inherent signal can be 10/20/40/80 ms, so not every frame will have a measurement signal, therefore, it is also necessary to determine the location of the first frame of the measurement signal after the RRC signaling takes effect. The information about UL unavailable resources in SIB or specific RRC signaling can include the location of the first frame where the measurement signal is located and the configuration information of time-frequency resources. Wherein, the first frame location represents the frame number of the first measurement signal in a measurement signal period after the effective time of the SIB or RRC signaling. When configuring the first frame number, the time difference between the signaling transmission and the effective time should be fully considered to ensure that the time domain location of the measurement signal is in a frame after the signaling effective frame. There can be one or more time-frequency resource configurations, each measurement signal configuration corresponds to one measurement signal, including the ID, period and offset, time domain location and frequency domain location of the measurement signal configuration.

In some examples, the measurement signal can also be a non-inherent signal of the aggressor base station, such as the CSI-RS mentioned above. In this case, the victim base station configures a rate matched parameters for the UE served by the victim base station within the BWP range of the UE served by the victim base station; sends configuration information of the UL unavailable resources, that is, the third configuration information, to the UE, the third configuration information can include: the rate matched parameter and the configuration information of the measurement signal in the time domain resource and frequency domain resource.

For the victim base station, in response to determining that the UE is scheduled to send UL data on the measurement signal resource configured by the aggressor base station, then the reception of uplink data (such as PUSCH) and the CLI measurement based on the measurement signal may be affected simultaneously. In order to avoid this situation, when scheduling PRACH, PUSCH, PUCCH or SRS, the victim base station avoids the time-frequency resource location of all the measurement signals used for CLI measurement. At this time, the victim base station can inform the resource configuration information of all the activated measurement signals to UE. In addition, for the transmission of uplink data (such as PUSCH), the victim base station can use rate matching to improve the UL resource utilization rate, that is, send PUSCH on RE resources that are not occupied by the measurement signal. For example, there is only one measurement signal resource for CLI measurement, in which the frequency domain density configuration of the measurement signal can be set according to the actual needs, for example, it can refer to the Comb configuration of the measurement signal shown in FIG. 7c above. In this case, the UE can perform PUSCH rate matching around the RE occupied by the measurement signal, so as to make full use of UL time-frequency resources. In the current 5G communication system, PUSCH rate matching is not supported. In order to support this function, the UE needs to be configured with PUSCH rate matching parameters.

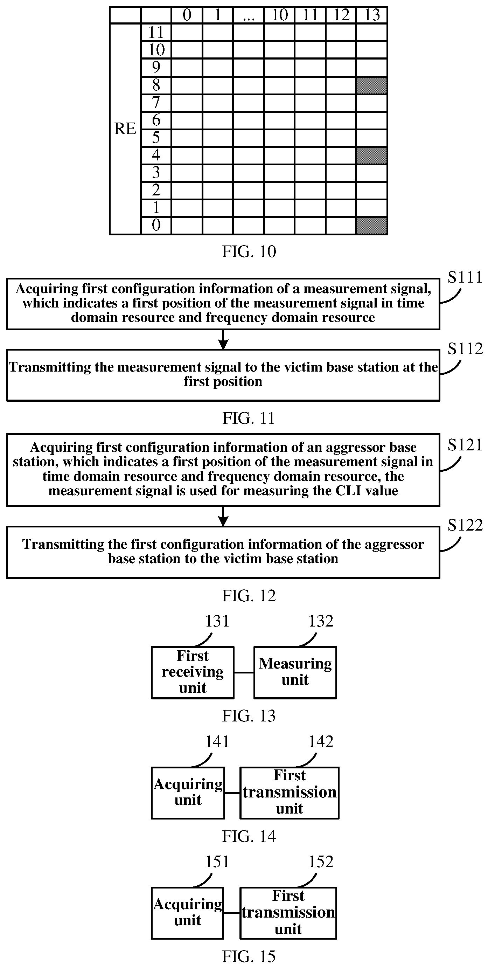

Taking PUSCH as an example, the rate matched parameters can be configured to the UE by the victim base station through RRC signaling. Since the BWP configuration of each UE in the aggressor base station may be different, it is necessary to configure PUSCH rate matching parameters for the UE within the BWP range of the UE. The process of configuring the rate matched parameters can be as follows: the detailed configuration information of all the activated measurement signal resources used for CLI measurement on the victim base station is sent to the UE. Within the BWP range of the UE, REs occupied by all the activated measurement signals are indicated as UL unavailable resources, the filled RE as shown in FIG. 10 cannot be used for UL transmission, while the other REs can be used for UL transmission; secondly, a new rate matching pattern is introduced for PUSCH, and the ID of the measurement signal resource that cannot be used for PUSCH transmission is added to the pattern. In this way, the UE can perform rate matching around these measurement signal resources. In order to be compatible with the current PUSCH rate matching parameter, PUSCH rate matching parameters can be introduced on the basis of the current RRC signaling.

In the examples of the present disclosure, in response to determining that the victim base station does not receive the rate matching parameters, the victim base station may not perform the rate matching, that is, use the PRB or symbols other than the UL unavailable resources to transmit other uplink data.

The method for measuring the CLI provided by the examples of the present disclosure is described in detail through SSB, CSI-IM signal and CSI-RS respectively.

1. Measuring the CLI using SSB includes the following blocks.

Block a: the adjacent base stations where the CLI may exist, obtains the frame structure configuration information, BWP configuration information, CLI reporting configuration information, beam management information, channel and signal time-frequency resource configuration information, including SSB configuration information, etc., from the controller.

Block b: the victim base station detects the SSB of the aggressor base station according to the information configured by the controller, to obtain a CLI measurement result; reports the CLI measurement result to the controller. The reported CLI measurement result can be CLI values of all aggressor base stations, or it can be a CLI value of an aggressor base station with which is determined by the victim base station itself to have CLI interference, or it can also be a CLI indicator indicating whether there is CLI interference. For example, in response to determining that the CLI value exceeds a certain threshold, it is determined that there is CLI interference.

Block c: the controller coordinates the time-frequency resource scheduling between the aggressor base station and the victim base station according to the CLI measurement result reported by the victim base station, for example, it suspends the PDSCH transmission of the aggressor base station or reduces the transmission power, or notifies the victim base station to suspend UL scheduling, etc.

Block d: each base station performs subsequent data transmission according to a control command received from the controller. Then, blocks b to c are repeated.

In the example of the present disclosure, during the CLI measurement using SSB, the aggressor base station continues to send SSB, and the victim base station also continues to perform CLI measurement.

2. When using CSI-IM signal for CLI measurement, CSI-IM signal resources can be configured as periodic CSI-IM signals, aperiodic CSI-IM signals and semi-persistent CSI-IM signals.

The period of the periodic CSI-IM signal is configured in the unit of slot, and can be selected from values such as 4/5/8/10/16/20/32/40/64/80/160/320/640/1280, etc. The periodic CSI-IM signals are configured in slots that may have CLI interference. Measuring the CLI using the periodic CSI-IM signal includes the following blocks.

Block a: the adjacent base stations where the CLI may exist, obtains the frame structure configuration information, BWP configuration information, CLI reporting configuration information, beam management information, channel and signal time-frequency resource configuration information, including CSI-IM signal configuration information, etc., from the controller.

Block b: the victim base station detects the CSI-IM signal of the aggressor base station according to the information configured by the controller and the measurement principle described above, to obtain a CLI measurement result; reports the CLI measurement result to the controller. The reported CLI measurement result can be CLI values of all aggressor base stations, or it can be a CLI value of an aggressor base station with which is determined by the victim base station itself to have CLI interference, or it can also be a CLI indicator indicating whether there is CLI interference. For example, in response to determining that the CLI value exceeds a certain threshold, it is determined that there is CLI interference.

Block c: the controller coordinates the time-frequency resource scheduling between the aggressor base station and the victim base station according to the CLI measurement result reported by the victim base station, for example, it suspends the PDSCH transmission of the aggressor base station or reduces the transmission power, or notifies the victim base station to suspend UL scheduling, etc.

Block d: each base station performs subsequent data transmission according to a control command received from the controller. Then, blocks b to c are repeated.

The configuration of semi-persistent CSI-IM signal is consistent with that of periodic CSI-IM signal, the difference is that the configuration of periodic CSI-IM signal is activated after the information exchange between base stations is completed, and the semi-persistent CSI-IM signal needs to be triggered and activated by the controller. The aperiodic CSI-IM signal is configured in response to determining that the victim base station detects the CLI, and then synchronized between the aggressor base station and the victim base station. Compared with periodic CSI-IM signals, semi-persistent and aperiodic CSI-IM signals can avoid resource waste caused by periodic CSI-IM signal configuration. Measuring the CLI using the semi-persistent or aperiodic CSI-IM signal includes the following blocks.

Block a: the adjacent base stations where the CLI may exist, obtains the frame structure configuration information, BWP configuration information, CLI reporting configuration information, beam management information, channel and signal time-frequency resource configuration information, including semi-persistent or aperiodic CSI-IM signal configuration information, etc., from the controller.

Block b: in response to determining that the victim base station detects that a certain slot has a worse performance degradation than other slots, for example, the decline in the Signal to Interference plus Noise Ratio (SINR) shows a significantly different characteristic from white noise interference, which causes UL data to fail to be received normally, it sends information to the controller to inform that there is the CLI between the base stations in this slot.

Block c: the controller configures CSI-IM resources for each aggressor base station according to information such as the frame structure, BWP, time-frequency resource allocation of channels and signals, and slots where CLI may exist, etc., of the base stations with CLI interference. In response to determining that the aggressor base station has a configured semi-persistent/aperiodic CSI-IM signal in the slot, then this semi-persistent/aperiodic CSI-IM signal is activated in the aggressor base station and the victim base station; in response to determining that the aggressor base station does not have a configured semi-persistent/aperiodic CSI-IM signal in the slot, then the CSI-IM resource is configured for the aggressor base station, and then the configuration information and corresponding activation time are sent to each aggressor base station, and the configuration information and corresponding activation times of all CSI-IM signals are sent to the victim base station. In the example of the present disclosure, the locations of CSI-IM signals of each base station can coincide or not.

Block d: the aggressor base station does not send any data on the specified time-frequency resource according to the configured CSI-IM resource, while the victim base station performs CLI measurement on the time-frequency resource, and then reports the CLI measurement result to the controller. The reported CLI measurement result can be CLI values of all aggressor base stations, CLI value(s) of some aggressor base stations or a certain aggressor base station, or CLI indicator(s) of all aggressor base stations, some aggressor base stations or a certain aggressor base station.

Block e: the controller notifies the base station without interference to stop configuring the CSI-IM signal (the base station with separate CSI-IM signal), coordinates the time-frequency resource scheduling between the aggressor base stations and the victim base station according to the CLI measurement result reported by the victim base station, for example, it suspends the DL PDSCH transmission of all the aggressor base station or reduces the DL transmission power, or notifies the victim base station to suspend UL scheduling, etc.

Block f: each base station performs subsequent data transmission according to a control command received from the controller. Then, blocks b to e are repeated.

3. When using CSI-RS for CLI measurement, CSI-RS resources can be configured as periodic CSI-RS, aperiodic CSI-RS and semi-persistent CSI-RS.

The period of the periodic CSI-RS is configured in the unit of slot, and can be selected from values such as 4/5/8/10/16/20/32/40/64/80/160/320/640/1280, etc. The periodic CSI-RS is configured in slots that may have CLI interference. Measuring the CLI using the periodic CSI-RS includes the following blocks.

Block a: the adjacent base stations where the CLI may exist, obtains the frame structure configuration information, BWP configuration information, CLI reporting configuration information, beam management information, channel and signal time-frequency resource configuration information, including CSI-RS configuration information, etc., from the controller .

Block b: the victim base station detects the CSI-RS signal of the aggressor base station according to the information configured by the controller and the measurement principle described above, to obtain a CLI measurement result; reports the CLI measurement result to the controller. The reported CLI measurement result can be CLI values of all aggressor base stations, or it can be a CLI value of an aggressor base station with which is determined by the victim base station itself to have CLI interference, or it can also be a CLI indicator indicating whether there is CLI interference. For example, in response to determining that the CLI value exceeds a certain threshold, it is determined that there is CLI interference.

Block c: the controller coordinates the time-frequency resource scheduling between the aggressor base station and the victim base station according to the CLI measurement result reported by the victim base station, for example, it suspends the PDSCH transmission of the aggressor base station or reduces the transmission power, or notifies the victim base station to suspend UL scheduling, etc.

Block d: each base station performs subsequent data transmission according to a control command received from the controller. Then, blocks b to c are repeated.

The configuration of semi-persistent CSI-RS is consistent with that of periodic CSI-RS, the difference is that the configuration of periodic CSI-RS is activated after the information exchange between base stations is completed, and the semi-persistent CSI-RS needs to be triggered and activated by the controller. The aperiodic CSI-RS is configured in response to determining that the victim base station detects the CLI, and then synchronized between the aggressor base station and the victim base station. Compared with periodic CSI-RS, semi-persistent and aperiodic CSI-RS can avoid resource waste caused by periodic CSI-RS configuration. Measuring the CLI using the semi-persistent or aperiodic CSI-RS includes the following blocks.

Block a: the adjacent base stations where the CLI may exist, obtains the frame structure configuration information, BWP configuration information, CLI reporting configuration information, beam management information, channel and signal time-frequency resource configuration information, including semi-persistent or aperiodic CSI-RS configuration information, etc., from the controller.

Block b: in response to determining that the victim base station detects that a certain slot has a worse performance degradation than other slots, for example, the decline in the SINR shows a significantly different feature from white noise interference, resulting in the UL data cannot be received normally, it sends information to the controller to inform that there is a CLI between the base stations in this slot.

Block c: the controller configures CSI-RS resources for each aggressor base station according to information such as the frame structure, BWP, time-frequency resource allocation of channels and signals, and slots where CLI may exist, etc., of the base stations with CLI interference. In response to determining that the aggressor base station has a configured semi-persistent/aperiodic CSI-RSS in this slot and the time-frequency resources do not coincide with each other, then the semi-persistent/aperiodic CSI-RS is activated in the aggressor base station and the victim base station; in response to determining that the aggressor base station does not have a configured semi-persistent/aperiodic CSI-IM signal in this slot, then CSI-RS resources which do not coincide with each other are configured for the aggressor base station, and then the configuration information and corresponding activation time are sent to each aggressor base station, and the configuration information and corresponding activation times of all CSI-RS signals are sent to the victim base station.

Block d: the aggressor base station sends CSI-RS on the specified time-frequency resource according to the configured CSI-RS resource, while the victim base station receives CSI-RS and performs CLI measurement on the time-frequency resource, and then reports the CLI measurement result to the controller. The reported CLI measurement result can be CLI values of all aggressor base stations, CLI value(s) of some aggressor base stations or a certain aggressor base station, or CLI indicator(s) of all aggressor base stations, some aggressor base stations or a certain aggressor base station.

Block e: the controller notifies the base station without interference to stop transmitting the CSI-RS, releases this part of CSI-RS configuration, the base station with interference continues to send CSI-RS, and the controller coordinates the time-frequency resource scheduling between the aggressor base station and the victim base station according to the CLI measurement result reported by the victim base station, for example, it suspends the DL PDSCH transmission of all aggressor base stations or reduces the DL transmission power, or notifies the victim base station to suspend UL scheduling, etc.

Block f: each base station performs subsequent data transmission according to a control command received from the controller. Then, blocks b to e are repeated.

Corresponding to the above method for measuring CLI, an example of the present disclosure further provides a method for measuring the CLI, as shown in FIG. 11, which is applied to an aggressor base station, including the following blocks:

block S111, acquiring first configuration information of a measurement signal, wherein the first configuration information indicates a first location of the measurement signal in time domain resource and frequency domain resource;

block S112, transmitting the measurement signal to the victim base station at the first location.

In some examples, the above method for measuring CLIs can also include:

generating first configuration information;

transmitting the first configuration information to a controller.

In some examples, the measurement signal is a non-inherent signal of the aggressor base station, and the above method can also include:
after generating the first configuration information, activating the first configuration information.

In some examples, the measurement signal is a non-inherent signal of the aggressor base station, and the above method can also include:

receiving activation time of the first configuration information for a first slot sent by the controller, or receiving activation time and the first configuration information for the first slot sent by the controller;

in response to determining that the activation time is reached, activating the first configuration information for the first slot.

In some examples, the measurement signal is a non-inherent signal of the aggressor base station, and the measurement signal is a zero power signal, first locations of measurement signals in the time domain resource and frequency domain resource in all aggressor base stations of the victim base station are the same or different; or first locations of measurement signals in the time domain resource and frequency domain resource in a part of aggressor base stations of the victim base station are the same.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, the symbol indicated by the first location in the aggressor base station is different from a symbol occupied by other downlink data.

In some examples, the patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

In some examples, in response to determining that there are multiple aggressor base stations, then the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,

a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is an inherent signal, the measurement signal is SSB;

in response to determining that the measured signal is a non-inherent signal, the measurement signal is CSI-IM signal or CSI-RS.

In some examples, the measurement signal is in a downlink slot or a flexible slot of the aggressor base station, and in an uplink slot or a flexible slot of the victim base station.

In the technical solution provided by the example of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

Corresponding to the above method for measuring CLI, an example of the present disclosure also provides a method for measuring CLI, as shown in FIG. 12, which is applied to a controller, including the following blocks:

block S121, acquiring first configuration information of an aggressor base station, wherein the first configuration information indicates a first location of a measurement signal in time domain resource and frequency domain resource, the measurement signal is used for measuring a CLI value;

block S122, transmitting the first configuration information of the aggressor base station to a victim base station.

In some examples, the above method for measuring CLI can also include:

receiving the CLI value or a CLI indicator measured by the victim base station based on the first configuration information, the CLI indicator is used to indicate whether there is the CLI between the victim base station and the aggressor base station;

coordinating time-frequency resource scheduling between the aggressor base station and the victim base station according to the CLI value or the CLI indicator.

In some examples, the block of acquiring the first configuration information of the aggressor base station includes:

receiving the first configuration information sent by the aggressor base station;

in response to determining that the first configuration information is not received, configuring the first configuration information for the aggressor base station.

In some examples, the measurement signal is a non-inherent signal of the aggressor base station, and the method further includes:

receiving a notification message sent by the victim base station, wherein the notification message indicates that there is the CLI in a first slot;

transmitting, in response to determining that there is the first configuration information of the aggressor base station in the first slot, activation time of the first configuration information for the first slot to the victim base station and the aggressor base station;

configuring, in response to determining that there is no first configuration information of the aggressor base station in the first slot, the first configuration information for the first slot for the aggressor base station, and transmitting the activation time and the first configuration information for the first slot to the victim base station and the aggressor base station.

In some examples, the measurement signal is a non-inherent signal of the aggressor base station, and the measurement signal is a zero power signal, in response to determining that there are multiple aggressor base stations, then first locations of measurement signals in the time domain resource and frequency domain resource in all the aggressor base stations are the same or different; or first locations of measurement signals in the time domain resource and frequency domain resource in a part of the aggressor base stations of the victim base station are the same.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, then the symbol indicated by the first location in the aggressor base station is different from a symbol occupied by other downlink data.

In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

In some examples, in response to determining that there are multiple aggressor base stations, the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,

a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is an inherent signal, the measurement signal is SSB;

in response to determining that the measured signal is a non-inherent signal, the measurement signal is CSI-IM signal or CSI-RS.

In some examples, the measurement signal is in a downlink slot or a flexible slot of the aggressor base station, and in an uplink slot or a flexible slot of the victim base station.

In the technical solution provided by the example of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

Corresponding to the above method for measuring CLI, an example of the present disclosure provides a device for measuring CLI, as shown in FIG. 13, which is applied to a victim base station, the device includes:

a first receiving unit 131, to receive a measurement signal transmitted by an aggressor base station;

a measuring unit 132, to measure, based on the measurement signal, a CLI value between the aggressor base station and the victim base station.

In some examples, the above device for measuring CLI can also include:

a first transmission unit, to transmit, after the CLI value is measured, the CLI value or a CLI indicator to a controller, the CLI indicator is used to indicate whether there is the CLI between the victim base station and the aggressor base station; or

a first transmission unit, to transmit, in response to determining that the CLI value is greater than a preset CLI threshold, the CLI value or a CLI indicator indicating that there is the CLI between the victim base station and the aggressor base station to the controller.

In some examples, the above device for measuring CLI can also include:

a second receiving unit, to receive first configuration information of the aggressor base station sent by the controller, the first configuration information indicates a first location of the measurement signal in time domain resource and frequency domain resource;
a first receiving unit 131 is specifically to:

determine, according to a carrier correspondence between the aggressor base station and the victim base station, a second location corresponding to the first location in the time domain resource and frequency domain resource in the victim base station;
receive a measurement signal at the second location.

In some examples, the measurement signal is a non-inherent signal of the aggressor base station, and after receiving the first configuration information, the device further includes:
a first activation unit, to activate the first configuration information.
In some examples, the measurement signal is a non-inherent signal of the aggressor base station, and the device further includes:

a second transmission unit, to transmit a notification message to the controller in response to determining that the CLI is detected in a first slot, and the notification message indicates that there is the CLI in the first slot;

a third receiving unit, to receive activation time of the first configuration information for the first slot sent by the controller, or receive activation time and the first configuration information for the first slot sent by the controller;

a second activation unit, to activate, in response to determining that the activation time is reached, the first configuration information for the first slot.

In some examples, the measurement signal is a non-inherent signal of the aggressor base station, and the measurement signal is a zero power signal. The measurement unit 132 is specifically to:

in response to determining that there are multiple aggressor base stations, and first locations of measurement signals in the time domain resource and frequency domain resource in all the aggressor base stations are different, measuring respectively a CLI value between each aggressor base station and the victim base station based on the measurement signal transmitted by each aggressor base station;

in response to determining that there are multiple aggressor base stations, and first locations of measurement signals in the time domain resource and frequency domain resource in a part of the aggressor base stations are the same, measuring respectively a CLI value between each of aggressor base stations with different first locations and the victim base station, and a total CLI value between the part of the aggressor base stations with the same first locations and the victim base station, based on the measurement signal transmitted by each aggressor base station;

in response to determining that there are multiple aggressor base stations, and first locations of measurement signals in the time domain resource and frequency domain resource in the multiple aggressor base stations are the same, measuring a total CLI value between the multiple aggressor base stations and the victim base station based on the measurement signal transmitted by each aggressor base station;

in response to determining that there is one aggressor base station, measuring the CLI value between this aggressor base station and the victim base station based on the measurement signal transmitted by this aggressor base station.

In some examples, a symbol indicated by the first location in the victim base station is the same as or different from a symbol occupied by an uplink demodulation reference signal.
In some examples, in response to determining that the symbol indicated by the first location in the victim base station is the same as the symbol occupied by the uplink demodulation reference signal, other downlink data occupying the symbol indicated by the first location in the aggressor base station uses other symbols.
In some examples, in response to determining that the symbol indicated by the first location in the victim base station is different from the symbol occupied by the uplink demodulation reference signal, then the symbol indicated by the first location in the aggressor base station is different from a symbol occupied by other downlink data.
In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, the measurement signal is a non-inherent signal of the aggressor base station, and the measurement signal is a non-zero power signal. The measurement unit 132 is specifically to measure, based on the measurement signal transmitted by each aggressor base station, the CLI value between each aggressor base station and the victim base station respectively.
In some examples, the measurement signal occupies a consecutive second preset number of resource elements every first preset number of resource elements on the symbol occupied by the measurement signal in the time domain resource.
In some examples, in response to determining that there are multiple aggressor base stations, the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,

a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is a non-zero power signal, the device further includes:
a setting unit, to set a location of the measurement signal in the time domain resource and frequency domain resource in the victim base station as an uplink UL unavailable resource.

In some examples, the measurement signal is an inherent signal of the aggressor base station, and the device further includes:

a third transmission unit, to transmit second configuration information of the UL unavailable resource to a user equipment UE served by the victim base station, the second configuration information comprise: a location of a first frame where the measurement signal is located, scheduling information and configuration information of the measurement signal in time domain resource and frequency domain resource;

the scheduling information instructs the UE to use physical resource blocks or symbols other than the UL unavailable resource to transmit other uplink data; or,

the scheduling information instructs the UE to perform rate matching on other uplink data around the UL unavailable resource, and then transmit the other uplink data subjected to the rate matching.

In some examples, the measurement signal is a non-inherent signal of the aggressor base station, and the device further includes:

a configuration unit, to configure a rate matched parameter for the UE served by the victim base station within a bandwidth part BWP range of the UE served by the victim base station;

a fourth transmission unit, to transmit third configuration information of the UL unavailable resource to the UE, the third configuration information comprises: the rate matched parameter and the configuration information of the measurement signal in the time domain resource and frequency domain resource.

In some examples, in response to determining that the measurement signal is an inherent signal, the measurement signal is SSB;
in response to determining that the measured signal is a non-inherent signal, the measurement signal is CSI-IM signal or CSI-RS.

In some examples, the measurement signal is in a downlink slot or a flexible slot of the aggressor base station, and in an uplink slot or a flexible slot of the victim base station.

In the technical solution provided by the example of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

Corresponding to the above method for measuring CLI, an example of the present disclosure provides a device for measuring CLI, as shown in FIG. 14, which is applied to an aggressor base station, the device includes:

an acquiring unit 141, to acquire first configuration information of a measurement signal, wherein the first configuration information indicates a first location of the measurement signal in time domain resource and frequency domain resource;
a first transmission unit 142, to transmit the measurement signal to the victim base station at the first location.

In some examples, the above device for measuring CLI can also include:

a generating unit, to generate the first configuration information;

a second transmission unit, to transmit the first configuration information to a controller.

In some examples, the measurement signal is a non-inherent signal of the aggressor base station, and the above device for measuring CLI can also include:
a first activation unit, to activate, after generating the first configuration information, the first configuration information.

In some examples, the measurement signal is a non-inherent signal of the aggressor base station, and the above device for measuring CLI can also include:

a receiving unit, to receive activation time of the first configuration information for a first slot sent by the controller, or receive activation time and the first configuration information for the first slot sent by the controller;

a second activation unit, to activate, in response to determining that the activation time is reached, the first configuration information for the first slot.

In some examples, the measurement signal is a non-inherent signal of the aggressor base station, and the measurement signal is a zero power signal, first locations of measurement signals in the time domain resource and frequency domain resource in all aggressor base stations of the victim base station are the same or different; or first locations of measurement signals in the time domain resource and frequency domain resource in a part of aggressor base stations of the victim base station are the same.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, the symbol indicated by the first location in the aggressor base station is different from the symbol occupied by other downlink data.

In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

In some examples, in response to determining that there are multiple aggressor base stations, then the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,

a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is an inherent signal, the measurement signal is SSB;
in response to determining that the measured signal is a non-inherent signal, the measurement signal is CSI-IM signal or CSI-RS.

In some examples, the measurement signal is in a downlink slot or a flexible slot of the aggressor base station, and in an uplink slot or a flexible slot of the victim base station.

In the technical solution provided by the example of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

Corresponding to the above method for measuring CLI, the example of the present disclosure provides a device for measuring CLI, as shown in FIG. 15, which is applied to a controller, the device includes:

an acquiring unit 151, to acquire first configuration information of an aggressor base station, wherein the first configuration information indicates a first location of a measurement signal in time domain resource and frequency domain resource, the measurement signal is used to measure a CLI value;

a first sending unit 152, to send the first configuration information of the aggressor base station to a victim base station.

In some examples, the above device for measuring CLI can also include:

a first receiving unit, to receive the CLI value or a CLI indicator measured by the victim base station based on the first configuration information, the CLI indicator is used to indicate whether there is the CLI between the victim base station and the aggressor base station;

a coordinating unit, to coordinate time-frequency resource scheduling between the aggressor base station and the victim base station according to the CLI value or the CLI indicator.

In some examples, the acquisition unit is specifically to:

receive the first configuration information sent by the aggressor base station;

in response to determining that the first configuration information is not received, configure the first configuration information for the aggressor base station.

In some examples, the measurement signal is a non-inherent signal of the aggressor base station, and the above device for measuring CLI can also include:

a second receiving unit, to receive a notification message sent by the victim base station, wherein the notification message indicates that there is the CLI in a first slot;

a first sending unit, to send, in response to determining that there is the first configuration information of the aggressor base station in the first slot, activation time of the first configuration information for the first slot to the victim base station and the aggressor base station;

a second sending unit, to configure, in response to determining that there is no first configuration information of the aggressor base station in the first slot, the first configuration information for the first slot for the aggressor base station, and sending the activation time and the first configuration information for the first slot to the victim base station and the aggressor base station.

In some examples, the measurement signal is a non-inherent signal of the aggressor base station, and the measurement signal is a zero power signal, in response to determining that there are multiple aggressor base stations, then first locations of measurement signals in the time domain resource and frequency domain resource in all the aggressor base stations are the same or different; or first locations of measurement signals in the time domain resource and frequency domain resource in a part of the aggressor base stations of the victim base station are the same.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, the symbol indicated by the first location in the aggressor base station is different from the symbol occupied by other downlink data.

In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

In some examples, in response to determining that there are multiple aggressor base stations, then the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,

a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is an inherent signal, the measurement signal is a synchronization signal block SSB;

in response to determining that the measured signal is a non-inherent signal, the measurement signal is CSI-IM signal or CSI-RS.

In some examples, the measurement signal is in a downlink slot or a flexible slot of the aggressor base station, and in an uplink slot or a flexible slot of the victim base station.

In the technical solution provided by the example of the present disclosure, the aggressor base station sends a measurement signal to the victim base station, and then the victim base station measures the measurement signal transmitted by the aggressor base station, so as to estimate the CLI value generated by the aggressor base station to the victim base station. Based on the CLI value generated by the aggressor base station to the victim base station, a corresponding CLI suppression technology can be obtained to coordinate the time-frequency resource scheduling between base stations, suppress the CLI in the F-TDD communication system, and reduce the impact of the CLI on the performance of the 5G communication system.

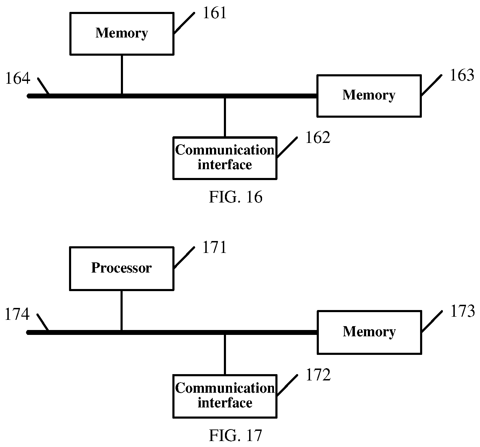

Corresponding to the above method for measuring CLI, an example of the present disclosure further provides a base station, as shown in FIG. 16, which comprises a processor 161, a communication interface 162, a memory 163 and a communication bus 164, wherein the processor 161, the communication interface 162 and the memory 163 communicate with each other via the communication bus 164;

the memory 163 is to store a computer program;

the processor 161 is carry out any of the above method for measuring CLI applied to the victim base station or the aggressor base station when executing the program stored on the memory.

With the above base station being the victim base station, when executing the program stored on the memory, the processor 161 is caused to: receive the measurement signal transmitted by the aggressor base station; measure the CLI value between the aggressor base station and the victim base station based on the measurement signal.

In some examples, when executing the program stored on the memory, the processor 161 is caused to: send the CLI value or a CLI indicator to the controller after measuring the CLI value, the CLI indicator is used to indicate whether there is the CLI between the victim base station and the aggressor base station; or, in response to determining that the CLI value is greater than a preset CLI threshold, send the CLI value or the CLI indicator indicating that there is the CLI between the victim base station and the aggressor base station to the controller.

In some examples, when executing the program stored on the memory, the processor 161 is caused to: receive the first configuration information of the aggressor base station sent by the controller, and the first configuration information indicates a first location of the measurement signal in the time domain resource and frequency domain resource; the block of receiving the measurement signal transmitted by the aggressor base station includes: determining, according to a carrier correspondence between the aggressor base station and the victim base station, a second location corresponding to the first location in the time domain resource and frequency domain resource in the victim base station; and receiving a measurement signal at the second location.

In some examples, the measurement signal is a non-inherent signal of the aggressor base station, when executing the program stored on the memory, the processor 161 is caused to: activate the first configuration information after receiving the first configuration information.

In some examples, the measurement signal is a non-inherent signal of the aggressor base station, when executing the program stored on the memory, the processor 161 is caused to: send a notification message to the controller in response to determining that the CLI is detected in a first slot, and the notification message indicates that there is the CLI in the first slot; receive activation time of the first configuration information for the first slot sent by the controller, or receive the activation time and the first configuration information for the first slot sent by the controller; in response to determining that the activation time is reached, activate the first configuration information for the first slot.

In some examples, the measurement signal is a non-inherent signal of the aggressor base station, and the measurement signal is a non-zero power signal, the block of measuring the cross link interference CLI value between the aggressor base station and the victim base station based on the measurement signal includes:

in response to determining that there are multiple aggressor base stations, and first locations of measurement signals in the time domain resource and frequency domain resource in all the aggressor base stations are different, measuring respectively a CLI value between each aggressor base station and the victim base station based on the measurement signal transmitted by each aggressor base station;

in response to determining that there are multiple aggressor base stations, and first locations of measurement signals in the time domain resource and frequency domain resource in a part of the aggressor base stations are the same, measuring respectively a CLI value between each of aggressor base stations with different first locations and the victim base station, and a total CLI value between the part of the aggressor base stations with the same first locations and the victim base station, based on the measurement signal transmitted by each aggressor base station;

in response to determining that there are multiple aggressor base stations, and first locations of measurement signals in the time domain resource and frequency domain resource in the multiple aggressor base stations are the same, measuring a total CLI value between the multiple aggressor base stations and the victim base station based on the measurement signal transmitted by each aggressor base station;

in response to determining that there is one aggressor base station, measuring the CLI value between this aggressor base station and the victim base station based on the measurement signal transmitted by this aggressor base station.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, the symbol indicated by the first location in the aggressor base station is different from the symbol occupied by other downlink data.

In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, the measurement signal is a non-inherent of the aggressor base station, and the measurement signal is a zero power signal;
the above block of measuring the CLI value of cross link interference between the aggressor base station and the victim base station based on the measurement signal includes: measuring, based on the measurement signal transmitted by each aggressor base station, the CLI value between each aggressor base station and the victim base station respectively.

In some examples, the measurement signal occupies a consecutive second preset number of resource elements every first preset number of resource elements on the symbol occupied by the measurement signal in the time domain resource.

In some examples, in response to determining that there are multiple aggressor base stations, then the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then a starting physical resource block of the measurement signal in the symbol indicated by the first location is a carrier starting point of the victim base station, and the size of the measurement signal is equal to the bandwidth of the victim base station; or, a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is a non-zero power signal, when executing the program stored on the memory, the processor 161 is caused to: set a location of the measurement signal in the time domain resource and frequency domain resource in the victim base station as a UL unavailable resource.

In some example, in response to determining that the measurement signal is an inherent signal of the aggressor base station, when executing the program stored on the memory, the processor 161 is caused to: send second configuration information of the UL unavailable resource to a UE served by the victim base station, the second configuration information includes: a location of a first frame where the measurement signal is located, scheduling information and configuration information of the measurement signal in time domain resource and frequency domain resource; the scheduling information instructs the UE to use physical resource blocks or symbols other than the UL unavailable resource to transmit other uplink data; or, the scheduling information instructs the UE to perform rate matching on other uplink data around the UL unavailable resource, and transmit the other uplink data subjected to the rate matching.

In some examples, in response to determining that the measurement signal is a non-inherent signal of the aggressor base station, when executing the program stored on the memory, the processor 161 is caused to: configure a rate matched parameters for the UE served by the victim base station within a bandwidth part BWP range of the UE served by the victim base station; send the third configuration information of the UL unavailable resource to the UE, the third configuration information can include: the rate matched parameter and the configuration information of the measurement signal in the time domain resource and frequency domain resource.

In some examples, in response to determining that the measurement signal is an inherent signal, the measurement signal is SSB; in response to determining that the measurement signal is a non-inherent signal, the measurement signal is CSI-IM signal or CSI-RS.

In some examples, the measurement signal is in a downlink slot or a flexible slot of the aggressor base station, and in an uplink slot or a flexible slot of the victim base station.

With the above base station being an aggressor base station, when executing the program stored on the memory, the processor 161 is caused to: acquire first configuration information of a measurement signal, and the first configuration information indicates a first location of the measurement signal in the time domain resource and the frequency domain resource; and send the measurement signal to the victim base station at the first location.

In some examples, when executing the program stored on the memory, the processor 161 is caused to: generate the first configuration information; and send the first configuration information to the controller.

In some examples, the measurement signal is a non-inherent signal of the aggressor base station, when executing the program stored on the memory, the processor 161 is caused to: activate the first configuration information after generating the first configuration information.

In some examples, the measurement signal is a non-inherent signal of the aggressor base station, when executing the program stored on the memory, the processor 161 is caused to: receive activation time of the first configuration information for a first slot sent by the controller, or receive activation time and the first configuration information for the first slot sent by the controller; in response to determining that the activation time is reached, activate the first configuration information for the first slot.

In some examples, the measurement signal is a non-inherent signal of the aggressor base station, and the measurement signal is a zero power signal, first locations of measurement signals in the time domain resource and frequency domain resource in all aggressor base stations of the victim base station are the same or different; or first locations of measurement signals in the time domain resource and frequency domain resource in a part of aggressor base stations of the victim base station are the same.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, the symbol indicated by the first location in the aggressor base station is different from the symbol occupied by other downlink data.

In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

In some examples, in response to determining that there are multiple aggressor base stations, then the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then a starting physical resource block of the measurement signal in the symbol indicated by the first location is a carrier starting point of the victim base station, and the size of the measurement signal is equal to the bandwidth of the victim base station; or, a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is an inherent signal, the measurement signal is an SSB; in response to determining that the measurement signal is a non-inherent signal, the measurement signal is a CSI-IM signal or a CSI-RS.

In some examples, the measurement signal is in a downlink slot or a flexible slot of the aggressor base station, and in an uplink slot or a flexible slot of the victim base station.

Corresponding to the above method for measuring CLI, an example of the present disclosure further provides a controller, as shown in FIG. 17, which comprises a processor 171, a communication interface 172, a memory 173 and a communication bus 174, wherein the processor 171, the communication interface 172 and the memory 173 communicate with each other via the communication bus 174;

the memory 173 is to store a computer program;

the processor 171 is to carry out any of the above method for measuring CLI applied to the controller when executing the program stored on the memory.

In the example of the present disclosure, when executing the program stored on the memory, the processor 171 is caused to: acquire first configuration information of the aggressor base station, wherein the first configuration information indicates a first location of a measurement signal in time domain resource and frequency domain resource, the measurement signal is used to measure a CLI value; and send the first configuration information of the aggressor base station to the victim base station.

In the example of the present disclosure, when executing the program stored on the memory, the processor 171 is caused to: receive the CLI value or a CLI indicator measured by the victim base station based on the first configuration information, the CLI indicator is used to indicate whether there is the CLI between the victim base station and the aggressor base station; coordinate the time-frequency resource scheduling between the aggressor base station and the victim base station according to the CLI value or CLI indicator.

In some examples, the block of acquiring the first configuration information of the aggressor base station includes: receiving the first configuration information sent by the aggressor base station; in response to determining that the first configuration information is not received, configuring the first configuration information for the aggressor base station.

In some examples, in response to determining that the measurement signal is a non-inherent signal, when executing the program stored on the memory, the processor 171 is caused to: receive a notification message sent by the victim base station, wherein the notification message indicates that there is the CLI in a first slot; send, in response to determining that there is the first configuration information of the aggressor base station in the first slot, activation time of the first configuration information for the first slot to the victim base station and the aggressor base station; configure, in response to determining that there is no first configuration information of the aggressor base station in the first slot, the first configuration information for the first slot for the aggressor base station, and sending the activation time and the first configuration information for the first slot to the victim base station and the aggressor base station.

In some examples, the measurement signal is a non-inherent signal of the aggressor base station, and the measurement signal is a zero power signal, in response to determining that there are multiple aggressor base stations, then first locations of measurement signals in the time domain resource and frequency domain resource in all the aggressor base stations are the same or different; or first locations of measurement signals in the time domain resource and frequency domain resource in a part of the aggressor base stations of the victim base station are the same.

In some examples, a symbol indicated by the first location in the victim base station is the same as or different from a symbol occupied by an uplink demodulation reference signal.

In some examples, in response to determining that the symbol indicated by the first location in the victim base station is the same as the symbol occupied by the uplink demodulation reference signal, other downlink data occupying the symbol indicated by the first location in the aggressor base station uses other symbols.

In some examples, in response to determining that the symbol indicated by the first location in the victim base station is different from the symbol occupied by the uplink demodulation reference signal, the symbol indicated by the first location in the aggressor base station is different from the symbol occupied by other downlink data.

In some examples, patterns of the measurement signal include a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

In some examples, in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

In some examples, in response to determining that there are multiple aggressor base stations, then the configuration information of the measurement signal in the victim base station is a set of the first configuration information of the multiple aggressor base stations.

In some examples, first locations of measurement signals in the time domain resource and frequency domain resource in all the aggressor base stations are the same or different.

In some examples, in response to determining that a bandwidth of the aggressor base station is greater than a bandwidth of the victim base station, then a starting physical resource block of the measurement signal in the symbol indicated by the first location is a carrier starting point of the victim base station, and the size of the measurement signal is equal to the bandwidth of the victim base station; or, a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

In some examples, in response to determining that the bandwidth of the aggressor base station is smaller than or equal to the bandwidth of the victim base station, the measurement signal in the symbol indicated by the first location occupies all physical resource blocks within the bandwidth range of the aggressor base station.

In some examples, in response to determining that the measurement signal is an inherent signal, the measurement signal is an SSB; in response to determining that the measurement signal is a non-inherent signal, the measurement signal is a CSI-IM signal or a CSI-RS.

In some examples, the measurement signal is in a downlink slot or a flexible slot of the aggressor base station, and in an uplink slot or a flexible slot of the victim base station.

The communication bus described above can be a peripheral component interconnect (PCI) bus or an extended industry standard architecture (EISA) bus, and the like. The communication bus can include an address bus, a data bus, a control bus, or the like. For representation, only one thick line is shown in the figure, which does not mean there is only one communication bus or one type of communication bus.

The communication interface is used for communication between the above base station or controller and other devices.

The memory can include a random access memory (RAM), or can include a non-volatile memory (NVM), for example at least one disk memory. In an example, the memory can also be at least one storage device located away from the processor described above.

The aforementioned processor can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

An example of the present disclosure provides a computer readable storage medium which stores a computer program thereon, the computer program when being executed by the processor, causes the processor to carry out one of the above method for measuring CLI.

In still another example of the present disclosure, there is also provided a computer program product containing instructions thereon, which when run on a computer, cause the computer to implement any of the above method for measuring CLI in the above examples.

In the aforementioned examples, it may be implemented in whole or in part by software, hardware, firmware, or any combination thereof. When implemented by software, it may be implemented in whole or in part in the form of a computer program product. The computer program product includes one or more computer instructions. The processes or functions described in accordance with the examples of the present disclosure is produced in whole or in part, when the computer program instructions are loaded and executed on a computer. The computer may be a general-purpose computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a cable (such as a coaxial cable, an optical fiber, a digital subscriber line (DSL)) or wireless (such as infrared, wireless, microwave, etc.). The computer-readable storage medium may be any available medium that may be accessed by a computer or a data storage device such as a server or a data center containing one or more available medium integrations. The available media may be magnetic media (such as floppy disks, hard disks, magnetic tapes), optical media (such as DVDs), or semiconductor media (such as solid state disk (SSD)), etc.

It should be noted that, the relationship terms herein such as "first", "second" and the like are only used to distinguish one entity or operation from another entity or operation, but do not necessarily require or imply that there is actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the examples are described in corresponding ways, same as or similar parts in each of the examples can be referred to one another, and the parts emphasized are differences to other examples. In particular, for examples of the device, examples of the base station, examples of the controller, examples of the computer readable storage medium, and examples of the program product, since they are substantially similar to the examples of the method, their description is relatively simple, and for the related aspects, one only needs to refer to portions of the description of the examples of the method.

The examples described above are merely preferred examples of the present disclosure, and not intended to limit the scope of the present disclosure. Any modifications, equivalents, improvements or the like within the spirit and principle of the disclosure should be included in the scope of the disclosure.

**Claims**

1.   A method for measuring cross link interference CLI, applied to a victim base station, comprising:

   receiving a measurement signal transmitted by an aggressor base station;
   measuring, based on the measurement signal, a cross link interference CLI value between the aggressor base station and the victim base station.

2.   The method of claim 1, wherein after measuring the CLI value, the method further comprises:

   transmitting the CLI value or a CLI indicator to a controller, the CLI indicator is used to indicate whether there is the CLI between the victim base station and the aggressor base station; or
   transmitting, in response to determining that the CLI value is greater than a preset CLI threshold, the CLI value or the CLI indicator indicating that there is the CLI between the victim base station and the aggressor base station to the controller.

3.   The method of claim 1, further comprising:

   receiving first configuration information of the aggressor base station sent by the controller, wherein the first configuration information indicates a first location of the measurement signal in time domain resource and frequency domain resource;
   wherein receiving the measurement signal transmitted by the aggressor base station comprises:

      determining, according to a carrier correspondence between the aggressor base station and the victim base station, a second location corresponding to the first location in the time domain resource and frequency domain resource in the victim base station;
      receiving a measurement signal at the second location.

4.   The method of claim 3, wherein the measurement signal is a non-inherent signal of the aggressor base station, after receiving the first configuration information, the method further comprises:

activating the first configuration information.

5. The method of claim 3, wherein the measurement signal is a non-inherent signal of the aggressor base station, the method further comprises:

transmitting a notification message to the controller in response to determining that the CLI is detected in a first slot, wherein the notification message indicates that there is the CLI in the first slot;
receiving activation time of the first configuration information for the first slot sent by the controller, or receiving activation time and the first configuration information for the first slot sent by the controller;
activating, in response to determining that the activation time is reached, the first configuration information for the first slot.

6. The method of claim 3, wherein the measurement signal is a non-inherent signal of the aggressor base station, and the measurement signal is a zero power signal, wherein measuring the CLI value between the aggressor base station and the victim base station based on the measurement signal comprises:

in response to determining that there are multiple aggressor base stations, and first locations of measurement signals in the time domain resource and frequency domain resource in all the aggressor base stations are different, measuring a CLI value between each aggressor base station and the victim base station based on the measurement signal transmitted by each aggressor base station, respectively;
in response to determining that there are multiple aggressor base stations, and first locations of measurement signals in the time domain resource and frequency domain resource in a part of the aggressor base stations are the same, measuring a CLI value between each of aggressor base stations and the victim base station with different first locations, respectively, and a total CLI value between the part of the aggressor base stations and the victim base station with the same first locations, based on the measurement signal transmitted by each aggressor base station, respectively;
in response to determining that there are multiple aggressor base stations, and first locations of measurement signals in the time domain resource and frequency domain resource in the multiple aggressor base stations are the same, measuring a total CLI value between the multiple aggressor base stations and the victim base station based on the measurement signal transmitted by each aggressor base station;
in response to determining that there is one aggressor base station, measuring the CLI value between this aggressor base station and the victim base station based on the measurement signal transmitted by this aggressor base station.

7. The method of claim 6, wherein a symbol indicated by the first location in the victim base station is the same as or different from a symbol occupied by an uplink demodulation reference signal.

8. The method of claim 7, wherein in response to determining that the symbol indicated by the first location in the victim base station is the same as the symbol occupied by the uplink demodulation reference signal, other downlink data occupying the symbol indicated by the first location in the aggressor base station uses other symbols.

9. The method of claim 7, wherein in response to determining that the symbol indicated by the first location in the victim base station is different from the symbol occupied by the uplink demodulation reference signal, the symbol indicated by the first location in the aggressor base station is different from a symbol occupied by other downlink data.

10. The method of claim 6, wherein patterns of the measurement signal comprise a first pattern and a second pattern;

in the first pattern, the measurement signal occupies two consecutive symbols in the time domain resource and two consecutive resource elements in each physical resource block in the frequency domain resource;
in the second pattern, the measurement signal occupies one symbol in the time domain resource and four consecutive resource elements in each physical resource block in the frequency domain resource.

11. The method of claim 3, wherein the measurement signal is a non-inherent signal of the aggressor base station, and the measurement signal is a non-zero power signal, wherein measuring the CLI value between the aggressor base station and the victim base station based on the measurement signal comprises:
measuring, based on the measurement signal transmitted by each aggressor base station, the CLI value between each aggressor base station and the victim base station, respectively.

12. The method of claim 11, wherein the measurement signal occupies a consecutive second preset number of resource elements every first preset number of resource elements on the symbol occupied by the measurement signal in the time domain resource.

13. The method of any one of claims 4-12, wherein in response to determining that there are multiple aggressor base stations, the configuration information of the measurement signal in the victim base station is a set of the first configuration information of the multiple aggressor base stations.

14. The method of claim 13, wherein first locations of measurement signals in the time domain resource and frequency domain resource in all the aggressor base stations are the same or different.

15. The method of any one of claims 4-12, wherein in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,
a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

16. The method of any one of claims 4-12, wherein in response to determining that the bandwidth of the aggressor base station is smaller than or equal to the bandwidth of the victim base station, the measurement signal in the symbol indicated by the first location occupies all physical resource blocks within the bandwidth range of the aggressor base station.

17. The method of any one of claims 1-12, wherein in response to determining that the measurement signal is a non-zero power signal, the method further comprises:
setting a location of the measurement signal in the time domain resource and frequency domain resource in the victim base station as an uplink UL unavailable resource.

18. The method of claim 17, wherein in response to determining that the measurement signal is an inherent signal of the aggressor base station, the method further comprises:

transmitting a second configuration information of the UL unavailable resource to a user equipment UE served by the victim base station, the second configuration information comprises: a location of a first frame where the measurement signal is located, scheduling information and configuration information of the measurement signal in time domain resource and frequency domain resource;
the scheduling information instructs the UE to use physical resource blocks or symbols other than the UL unavailable resource to transmit other uplink data; or,
the scheduling information instructs the UE to perform rate matching around the UL unavailable resource for other uplink data, and then transmit the other uplink data subjected to the rate matching.

19. The method of claim 17, wherein in response to determining that the measurement signal is a non-inherent signal of the aggressor base station, the method further comprises:

configuring a rate matched parameter for the UE served by the victim base station within a bandwidth part BWP range of the UE served by the victim base station;
transmitting a third configuration information of the UL unavailable resource to the UE, wherein the third configuration information comprises: the rate matched parameter and the configuration information of the measurement signal in the time domain resource and frequency domain resource.

20. The method of any one of claims 1-12, wherein in response to determining that the measurement signal is an inherent signal, the measurement signal is a synchronization signal block SSB;
in response to determining that the measurement signal is a non-inherent signal, the measurement signal is a channel state information-interference measurement CSI-IM signal or a channel state information-reference signal CSI-RS.

21. The method of any one of claims 1-12, wherein the measurement signal is in a downlink slot or a flexible slot of the aggressor base station, and in an uplink slot or a flexible slot of the victim base station.

22. A method for measuring cross link interference CLI, applied to an aggressor base station, comprising:

acquiring first configuration information of a measurement signal, wherein the first configuration information indicates a first location of the measurement signal in time domain resource and frequency domain resource; transmitting the measurement signal to the victim base station at the first location.

23. The method of claim 22, further comprising:

generating the first configuration information; transmitting the first configuration information to a controller.

24. The method of claim 23, wherein the measurement signal is a non-inherent signal of the aggressor base station, the method further comprises:
after generating the first configuration information, activating the first configuration information.

25. The method of claim 23, wherein the measurement signal is a non-inherent signal of the aggressor base station, the method further comprises:

receiving activation time of the first configuration information for a first slot sent by the controller, or receiving activation time and the first configuration information for the first slot sent by the controller; in response to determining that the activation time is reached, activating the first configuration information for the first slot.

26. The method of claim 23, wherein the measurement signal is a non-inherent signal of the aggressor base station, and the measurement signal is a zero power signal, first locations of measurement signals in the time domain resource and frequency domain resource in all aggressor base stations of the victim base station are the same or different; or first locations of measurement signals in the time domain resource and frequency domain resource in a part of aggressor base stations of the victim base station are the same.

27. The method of claim 26, wherein a symbol indicated by the first location in the victim base station is the same as or different from a symbol occupied by an uplink demodulation reference signal.

28. The method of claim 27, wherein in response to determining that the symbol indicated by the first location in the victim base station is the same as the symbol occupied by the uplink demodulation reference signal, other downlink data occupying the symbol indicated by the first location in the aggressor base station uses other symbols.

29. The method of claim 27, wherein in response to determining that the symbol indicated by the first location in the victim base station is different from the symbol occupied by the uplink demodulation reference signal, then the symbol indicated by the first location in the aggressor base station is different from a symbol occupied by other downlink data.

30. The method of claim 26, wherein patterns of the measurement signal comprise a first pattern and a second pattern;

in the first pattern, the measurement signal occupies two consecutive symbols in the time domain resource and two consecutive resource elements in each physical resource block in the frequency domain resource; in the second pattern, the measurement signal occupies one symbol in the time domain resource and four consecutive resource elements in each physical resource block in the frequency domain resource.

31. The method of claim 23, wherein in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

32. The method of any one of claims 24-31, wherein in response to determining that there are multiple aggressor base stations, then the configuration information of the measurement signal in the victim base station is a set of the first configuration information of the multiple aggressor base stations.

33. The method of claim 32, wherein first locations of measurement signals in the time domain resource and frequency domain resource in all the aggressor base stations are the same or different.

34. The method of any one of claims 24-31, wherein in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,
a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

35. The method of any one of claims 24-31, wherein in response to determining that the bandwidth of the aggressor base station is smaller than or equal to the bandwidth of the victim base station, the measurement signal in the symbol indicated by the first location occupies all physical resource blocks within the bandwidth range of the aggressor base station.

36. The method of any one of claims 22-31, wherein in response to determining that the measurement signal is an inherent signal, the measurement signal is a synchronization signal block SSB;
in response to determining that the measurement signal is a non-inherent signal, the measurement signal is a channel state information-interference measurement CSI-IM signal or a channel state information-reference signal CSI-RS.

37. The method of any one of claims 22-31, wherein the measurement signal is in a downlink slot or a flexible slot of the aggressor base station, and in an uplink slot or a flexible slot of the victim base station.

38. A method for measuring cross link interference CLI, applied to a controller, comprising:

acquiring first configuration information of an aggressor base station, wherein the first configuration information indicates a first location of a measurement signal in the time domain resource and frequency domain resource, the measurement signal is used to measure a CLI value;
transmitting the first configuration information of the aggressor base station to a victim base station.

39. The method of claim 38, further comprising:

receiving the CLI value or a CLI indicator measured by the victim base station based on the first configuration information, the CLI indicator is used to indicate whether there is the CLI between the victim base station and the aggressor base station;
coordinating time-frequency resource scheduling between the aggressor base station and the victim base station according to the CLI value or the CLI indicator.

40. The method of claim 38, wherein acquiring the first configuration information of the aggressor base station comprises:

receiving the first configuration information sent by the aggressor base station;
in response to determining that the first configuration information is not received, configuring the first configuration information for the aggressor base station.

41. The method of claim 40, wherein the measurement signal is a non-inherent signal of the aggressor base station, the method further comprises:

receiving a notification message sent by the victim base station, wherein the notification message indicates that there is the CLI in a first slot;
transmitting, in response to determining that there is the first configuration information of the aggressor base station in the first slot, activation time of the first configuration information for the first slot to the victim base station and the aggressor base station;
configuring, in response to determining that there is no first configuration information of the aggressor base station in the first slot, the first configuration information for the first slot for the aggressor base station, and transmitting the activation time and the first configuration information for the first slot to the victim base station and the aggressor base station.

42. The method of claim 38, wherein the measurement signal is a non-inherent signal of the aggressor base station, and the measurement signal is a zero power signal, in response to determining that there are multiple aggressor base stations, then first locations of measurement signals in the time domain resource and frequency domain resource in all the aggressor base stations are the same or different; or first locations of measurement signals in the time domain resource and frequency domain resource in a part of the aggressor base stations of the victim base station are the same.

43. The method of claim 42, wherein a symbol indicated by the first location in the victim base station is the same as or different from a symbol occupied by an uplink demodulation reference signal.

44. The method of claim 43, wherein in response to determining that the symbol indicated by the first location in the victim base station is the same as the symbol occupied by the uplink demodulation reference signal, other downlink data occupying the symbol indicated by the first location in the aggressor base station uses other symbols.

45. The method of claim 43, wherein in response to determining that the symbol indicated by the first location in the victim base station is different from the symbol occupied by the uplink demodulation reference signal, the symbol indicated by the first location in the aggressor base station is different from a symbol occupied by other downlink data.

46. The method of claim 42, wherein patterns of the measurement signal comprise a first pattern and a second pattern;

in the first pattern, the measurement signal occupies two consecutive symbols in the time domain resource and two consecutive resource elements in each physical resource block in the frequency domain resource;
in the second pattern, the measurement signal occupies one symbol in the time domain resource and four consecutive resource elements in each physical resource block in the frequency domain resource.

47. The method of claim 38, wherein in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

48. The method of any one of claims 40-47, wherein in response to determining that there are multiple aggressor base stations, the configuration information of the measurement signal in the victim base station is a set of the first configuration information of the multiple aggressor base stations.

49. The method of claim 48, wherein first locations of measurement signals in the time domain resource and frequency domain resource in all the aggressor base stations are the same or different.

50. The method of any one of claims 40-47, wherein in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,
a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

51. The method of any one of claims 40-47, wherein in response to determining that the bandwidth of the aggressor base station is smaller than or equal to the bandwidth of the victim base station, the measurement signal in the symbol indicated by the first location occupies all physical resource blocks within the bandwidth range of the aggressor base station.

52. The method of any one of claims 38-47, wherein in response to determining that the measurement signal is an inherent signal, the measurement signal is a synchronization signal block SSB;

in response to determining that the measurement signal is a non-inherent signal, the measurement signal is a channel state information-interference measurement CSI-IM signal or a channel state information-reference signal CSI-RS.

53. The method of any one of claims 38-47, wherein the measurement signal is in a downlink slot or a flexible slot of the aggressor base station, and in an uplink slot or a flexible slot of the victim base station.

54. A device for measuring cross link interference CLI, applied to a victim base station, comprising:

a first receiving unit, to receive a measurement signal transmitted by an aggressor base station;
a measurement unit, to measure, based on the measurement signal, a cross link interference CLI value between the aggressor base station and the victim base station.

55. The device of claim 54, further comprising:

a first transmission unit, to transmit, after the CLI value is measured, the CLI value or a CLI indicator to a controller, the CLI indicator is used to indicate whether there is the CLI between the victim base station and the aggressor base station; or
a first transmission unit, to transmit, in response to determining that the CLI value is greater than a preset CLI threshold, the CLI value or the CLI indicator indicating that there is the CLI between the victim base station and the aggressor base station to the controller.

56. The device of claim 54, further comprising:

a second receiving unit, to receive first configuration information of the aggressor base station sent by the controller, wherein the first configuration information indicates a first location of the measurement signal in time domain resource and frequency domain resource;
wherein the first receiving unit is specifically to:

determine, according to a carrier correspondence between the aggressor base station and the victim base station, a second location corresponding to the first location in the time domain resource and frequency domain resource in the victim base station;
receive a measurement signal at the second location.

57. The device of claim 56, wherein the measurement signal is a non-inherent signal of the aggressor base station, after receiving the first configuration information, the device further comprises:
a first activation unit, to activate the first configuration information.

58. The device of claim 56, wherein the measurement signal is a non-inherent signal of the aggressor base station, the device further comprises:

a second transmission unit, to transmit a notification message to the controller in response to determining that the CLI is detected in a first slot, wherein the notification message indicates that there is the CLI in the first slot;
a third receiving unit, to receive activation time of the first configuration information for the first slot sent by the controller, or receive activation time and the first configuration information for the first slot sent by the controller;
a second activation unit, to activate, in response to determining that the activation time is reached, the first configuration information for the first slot.

59. The device of claim 56, wherein the measurement signal is a non-inherent signal of the aggressor base station, and the measurement signal is a zero power signal, the measurement unit is specifically to:

in response to determining that there are multiple aggressor base stations, and first locations of measurement signals in all the aggressor base stations in the time domain resource and frequency domain resource are different, measuring a CLI value between each aggressor base station and the victim base station based on the measurement signal transmitted by each aggressor base station, respectively;
in response to determining that there are multiple aggressor base stations, and first locations of measurement signals in a part of the aggressor base stations in the time domain resource and frequency domain resource are the same, measuring a CLI value between each of aggressor base stations and the victim base station with different first locations , respectively, and a total CLI value between the part of the aggressor base stations and the victim base station with the same first locations, based on the measurement signal transmitted by each aggressor base station, respectively;

in response to determining that there are multiple aggressor base stations, and first locations of measurement signals in the multiple aggressor base stations in the time domain resource and frequency domain resource are the same, measuring a total CLI value between the multiple aggressor base stations and the victim base station based on the measurement signal transmitted by each aggressor base station;

in response to determining that there is one aggressor base station, measuring the CLI value between this aggressor base station and the victim base station based on the measurement signal transmitted by this aggressor base station.

60. The device of claim 59, wherein a symbol indicated by the first location in the victim base station is the same as or different from a symbol occupied by an uplink demodulation reference signal.

61. The device of claim 60, wherein in response to determining that the symbol indicated by the first location in the victim base station is the same as the symbol occupied by the uplink demodulation reference signal, other downlink data occupying the symbol indicated by the first location in the aggressor base station uses other symbols.

62. The device of claim 60, wherein in response to determining that the symbol indicated by the first location in the victim base station is different from the symbol occupied by the uplink demodulation reference signal, the symbol indicated by the first location in the aggressor base station is different from a symbol occupied by other downlink data.

63. The device of claim 59, wherein patterns of the measurement signal comprise a first pattern and a second pattern;

in the first pattern, the measurement signal occupies two consecutive symbols in the time domain resource and two consecutive resource elements in each physical resource block in the frequency domain resource;
in the second pattern, the measurement signal occupies one symbol in the time domain resource and four consecutive resource elements in each physical resource block in the frequency domain resource.

64. The device of claim 56, wherein the measurement signal is a non-inherent signal of the aggressor base station, and the measurement signal is a non-zero power signal, wherein the measurement unit is specifically to measure, based on the measurement signal transmitted by each aggressor base station, the CLI value between each aggressor base station and the victim base station respectively.

65. The device of claim 64, wherein the measurement signal occupies a consecutive second preset number of resource elements every first preset number of resource elements on the symbol occupied by the measurement signal in the time domain resource.

66. The device of any one of claims 57-65, wherein in response to determining that there are multiple aggressor base stations, the configuration information of the measurement signal in the victim base station is a set of the first configuration information of the multiple aggressor base stations.

67. The device of claim 66, wherein first locations of measurement signals in the time domain resource and frequency domain resource in all the aggressor base stations are the same or different.

68. The device of any one of claims 57-65, wherein in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,
a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

69. The device of any one of claims 57-66, wherein in response to determining that the bandwidth of the aggressor base station is smaller than or equal to the bandwidth of the victim base station, the measurement signal in the symbol indicated by the first location occupies all physical resource blocks within the bandwidth range of the aggressor base station.

70. The device of any one of claims 54-66, wherein in response to determining that the measurement signal is a non-zero power signal, the device further comprises:
a setting unit, to set a location of the measurement signal in the time domain resource and frequency domain resource in the victim base station as an uplink UL unavailable resource.

71. The device of claim 70, wherein in response to determining that the measurement signal is an inherent signal of the aggressor base station, the device further comprises:

> a third transmission unit, to transmit second configuration information of the UL unavailable resource to a user equipment UE served by the victim base station, the second configuration information comprise: a location of a first frame where the measurement signal is located, scheduling information and configuration information of the measurement signal in time domain resource and frequency domain resource;
> the scheduling information instructs the UE to use physical resource blocks or symbols other than the UL unavailable resource to transmit other uplink data; or,
> the scheduling information instructs the UE to perform rate matching on other uplink data around the UL unavailable resource, and then transmit the other uplink data subjected to the rate matching.

72. The device of claim 70, wherein in response to determining that the measurement signal is a non-inherent signal of the aggressor base station, the device further comprises:

> a configuration unit, to configure a rate matched parameter for the UE served by the victim base station within a bandwidth part BWP range of the UE served by the victim base station;
> a fourth transmission unit, to transmit the third configuration information of the UL unavailable resource to the UE, wherein the third configuration information comprises: the rate matched parameter and the configuration information of the measurement signal in the time domain resource and frequency domain resource.

73. The device of any one of claims 54-66, wherein in response to determining that the measurement signal is an inherent signal, the measurement signal is a synchronization signal block SSB;
in response to determining that the measurement signal is a non-inherent signal, the measurement signal is a channel state information-interference measurement CSI-IM signal or a channel state information-reference signal CSI-RS.

74. The device of any one of claims 54-66, wherein the measurement signal is in a downlink slot or a flexible slot of the aggressor base station, and in an uplink slot or a flexible slot of the victim base station.

75. A device for measuring cross link interference CLI, applied to an aggressor base station, comprising:

> an acquiring unit, to acquire first configuration information of a measurement signal, wherein the first configuration information indicates a first location of the measurement signal in time domain resource and frequency domain resource;
> a first transmission unit, to transmit the measurement signal to the victim base station at the first location.

76. The device of claim 75, further comprising:

> a generating unit, to generate the first configuration information;
> a second transmission unit, to transmit the first configuration information to a controller.

77. The device of claim 76, wherein the measurement signal is a non-inherent signal of the aggressor base station, the device further comprises:
a first activation unit, to activate, after generating the first configuration information, the first configuration information.

78. The device of claim 76, wherein the measurement signal is a non-inherent signal of the aggressor base station, the device further comprises:

> a receiving unit, to receive activation time of the first configuration information for a first slot sent by the controller, or receive activation time and the first configuration information for the first slot sent by the controller;
> a second activation unit, to activate, in response to determining that the activation time is reached, the first configuration information for the first slot.

79. The device of claim 76, wherein the measurement signal is a non-inherent signal of the aggressor base station, and the measurement signal is a zero power signal, first locations of measurement signals in the time domain resource and frequency domain resource in all aggressor base stations of the victim base station are the same or different; or first locations of measurement signals in the time domain resource and frequency domain resource in a part of aggressor base stations of the victim base station are the same.

80. The device of claim 79, wherein a symbol indicated by the first location in the victim base station is the same as or different from a symbol occupied by an uplink demodulation reference signal.

81. The device of claim 80, wherein in response to determining that the symbol indicated by the first location in the victim base station is the same as the symbol occupied by the uplink demodulation reference signal, other downlink data occupying the symbol indicated by the first location in the aggressor base station uses other symbols.

82. The device of claim 80, wherein in response to determining that the symbol indicated by the first location in the victim base station is different from the symbol occupied by the uplink demodulation reference signal, then the symbol indicated by the first location in the aggressor base station is different from a symbol occupied by other downlink data.

83. The device of claim 79, wherein patterns of the measurement signal comprise a first pattern and a second pattern;

in the first pattern, the measurement signal occupies two consecutive symbols in the time domain resource and two consecutive resource elements in each physical resource block in the frequency domain resource;
in the second pattern, the measurement signal occupies one symbol in the time domain resource and four consecutive resource elements in each physical resource block in the frequency domain resource.

84. The device of claim 76, wherein in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

85. The device of any one of claims 77-84, wherein in response to determining that there are multiple aggressor base stations, then the configuration information of the measurement signal in the victim base station is a set of the first configuration information of the multiple aggressor base stations.

86. The device of claim 85, wherein first locations of measurement signals in the time domain resource and frequency domain resource in all the aggressor base stations are the same or different.

87. The device of any one of claims 77-84, wherein in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,
a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

88. The device of any one of claims 77-84, wherein in response to determining that the bandwidth of the aggressor base station is smaller than or equal to the bandwidth of the victim base station, the measurement signal in the symbol indicated by the first location occupies all physical resource blocks within the bandwidth range of the aggressor base station.

89. The device of any one of claims 75-84, wherein in response to determining that the measurement signal is an inherent signal, the measurement signal is a synchronization signal block SSB;
in response to determining that the measurement signal is a non-inherent signal, the measurement signal is a channel state information-interference measurement CSI-IM signal or a channel state information-reference signal CSI-RS.

90. The device of any one of claims 75-84, wherein the measurement signal is in a downlink slot or a flexible slot of the aggressor base station, and in an uplink slot or a flexible slot of the victim base station.

91. A device for measuring cross link interference CLI, applied to a controller, comprising:

an acquiring unit, to acquire first configuration information of an aggressor base station, wherein the first configuration information indicates a first location of a measurement signal in time domain resource and frequency domain resource, the measurement signal is used to measure a CLI value;
a first transmission unit, to transmit the first configuration information of the aggressor base station to a victim base station.

92. The device of claim 91, further comprising:

a first receiving unit, to receive the CLI value or a CLI indicator measured by the victim base station based on the first configuration information, the CLI indicator is used to indicate whether there is the CLI between the victim base station and the aggressor base station;
a coordinating unit, to coordinate time-frequency resource scheduling between the aggressor base station and the victim base station according to the CLI value or the CLI indicator.

93. The device of claim 91, wherein the acquisition unit is specifically to:

receive the first configuration information sent by the aggressor base station;
in response to determining that the first configuration information is not received, configure the first configuration information for the aggressor base station.

94. The device of claim 93, wherein the measurement signal is a non-inherent signal of the aggressor base station, the device further comprises:

a second receiving unit, to receive a notification message sent by the victim base station, wherein the notification message indicates that there is the CLI in a first slot;
a first sending unit, to send, in response to determining that there is the first configuration information of the aggressor base station in the first slot, activation time of the first configuration information for the first slot to the victim base station and the aggressor base station;
a second sending unit, to configure, in response to determining that there is no first configuration information of the aggressor base station in the first slot, the first configuration information for the first slot for the aggressor base station, and sending the activation time and the first configuration information for the first slot to the victim base station and the aggressor base station.

95. The device of claim 91, wherein the measurement signal is a non-inherent signal of the aggressor base station, and the measurement signal is a zero power signal, in response to determining that there are multiple aggressor base stations, then first locations of measurement signals in the time domain resource and frequency domain resource in all the aggressor base stations are the same or different; or first locations of measurement signals in the time domain resource and frequency domain resource in a part of the aggressor base stations of the victim base station are the same.

96. The device of claim 95, wherein a symbol indicated by the first location in the victim base station is the same as or different from a symbol occupied by an uplink demodulation reference signal.

97. The device of claim 96, wherein in response to determining that the symbol indicated by the first location in the victim base station is the same as the symbol occupied by the uplink demodulation reference signal, other downlink data occupying the symbol indicated by the first location in the aggressor base station uses other symbols.

98. The device of claim 96, wherein in response to determining that the symbol indicated by the first location in the victim base station is different from the symbol occupied by the uplink demodulation reference signal, the symbol indicated by the first location in the aggressor base station is different from a symbol occupied by other downlink data.

99. The device of claim 95, wherein patterns of the measurement signal comprise a first pattern and a second pattern;

in the first pattern, the measurement signal occupies two consecutive symbols in the time domain resource and two consecutive resource elements in each physical resource block in the frequency domain resource;

in the second pattern, the measurement signal occupies one symbol in the time domain resource and four consecutive resource elements in each physical resource block in the frequency domain resource.

**100.**

The device of claim 91, wherein in response to determining that the measurement signal is a non-inherent signal of the aggressor base station, and the measurement signal is a non-zero power signal, the measurement signal occupies a consecutive second preset number of resource elements every first preset number of resource elements on the symbol occupied by the measurement signal in the time domain resource.

**101.**

The device of any one of claims 93-100, wherein in response to determining that there are multiple aggressor base stations, then the configuration information of the measurement signal in the victim base station is a set of the first configuration information of the multiple aggressor base stations.

**102.**

The device of claim 101, wherein first locations of measurement signals in the time domain resource and frequency domain resource in all the aggressor base stations are the same or different.

**103.**

The device of any one of claims 93-100, wherein in response to determining that a bandwidth of the aggressor base station is greater than a bandwidth of the victim base station, then

a starting physical resource block of the measurement signal in the symbol indicated by the first location is a carrier starting point of the victim base station, and the size of the measurement signal is equal to the bandwidth of the victim base station; or,

a serial number of the starting physical resource block of the measurement signal in the symbol indicated by the first location is a minimum value that is greater than the carrier starting point of the victim base station and is divisible by 4, and the size of the measurement signal is equal to the bandwidth of the victim base station, or a maximum value that is smaller than or equal to the bandwidth of the victim base station and is divisible by 4.

**104.**

The device of any one of claims 93-100, wherein in response to determining that the bandwidth of the aggressor base station is smaller than or equal to the bandwidth of the victim base station, the measurement signal in the symbol indicated by the first location occupies all physical resource blocks within the bandwidth range of the aggressor base station.

**105.**

The device of any one of claims 91-100, wherein in response to determining that the measurement signal is an inherent signal, the measurement signal is a synchronization signal block SSB;

in response to determining that the measurement signal is a non-inherent signal, the measurement signal is a channel state information-interference measurement CSI-IM signal or a channel state information-reference signal CSI-RS.

**106.**

The device of any one of claims 91-100, wherein the measurement signal is in a downlink slot or a flexible slot of the aggressor base station, and in an uplink slot or a flexible slot of the victim base station.

**107.**

A base station comprising a processor, a communication interface, a memory and a communication bus, wherein the processor, the communication interface and the memory communicate with each other via the communication bus;

the memory is to store a computer program;

the processor is to carry out the method of any one of claims 1-21 or 22-37 when executing the program stored on the memory.

**108.**

A controller comprising a processor, a communication interface, a memory and a communication bus, wherein the processor, the communication interface and the memory communicate with each other via the communication bus;

the memory is to store a computer program;

the processor is to carry out the method of any one of claims 38-53 when executing the program stored on the memory.

**109.**

A computer readable storage medium having stored therein a computer program, when being executed by a processor, cause the processor to carry out the method of any one of claims 1-21, 22-37 or 38-53.

| Slot | 0 | 1 | 2 | 3 | 4 |
|---|---|---|---|---|---|
| Frame structure | D | D | D | S | U |

| Slot | 0 | 1 | 2 | 3 | 4 |
|---|---|---|---|---|---|
| Frame structure | D | S | U | U | U |

gNB0

gNB1

gNB-gNB CLI

UE-UE CLI

DL

UL

UE0

UE1

FIG. 1

| Receiving a measurement signal transmitted by an aggressor base station | S21 |
|---|---|

↓

| Measuring, based on the measurement signal, a CLI value between the aggressor base station and the victim base station | S22 |
|---|---|

FIG. 2

| Receiving a measurement signal transmitted by an aggressor base station | S31 |
|---|---|

↓

| Measuring, based on the measurement signal, a CLI value between the aggressor base station and the victim base station | S32 |
|---|---|

↓

| Transmitting the CLI value or a CLI indicator to the controller | S33 |
|---|---|

FIG. 3

Controller

Xn or F1

gNB0

Xn or F1

gNB-gNB
CLI

DL

UL

UE-UE
CLI

gNB1

UE1

UE0

FIG. 4a

Controller

Xn or F1

gNB0

Xn or F1

gNB-gNB
CLI

| Slot | 0 | 1 | 2 | 3 | 4 |
|---|---|---|---|---|---|
| Frame structure | D | D | D | S | U |

DL

UL

UE-UE
CLI

gNB1

UE1

UE0

| Slot | 0 | 1 | 2 | 3 | 4 |
|---|---|---|---|---|---|
| Frame structure | D | S | U | U | U |

| Symbol | 0 | 1 | ... | 10 | 11 | 12 | 13 |
|---|---|---|---|---|---|---|---|
| PRB | | CSI-IM | | | | | |

| Symbol | 0 | 1 | ... | 10 | 11 | 12 | 13 |
|---|---|---|---|---|---|---|---|
| PRB | | DMRS | | | | | |

FIG. 4b

FIG. 5a

FIG. 5b

DL                                    UL

FIG. 6

|  |  | 0 | 1 | ... | 10 | 11 | 12 | 13 |
|---|---|---|---|---|---|---|---|---|
| RE | 11 |  |  |  |  |  |  | ▨ |
|  | 10 |  |  |  |  |  |  | ▨ |
|  | 9 |  |  |  |  |  |  | ▨ |
|  | 8 |  |  |  |  |  |  | ▨ |
|  | 7 |  |  |  |  |  |  | ▨ |
|  | 6 |  |  |  |  |  |  | ▨ |
|  | 5 |  |  |  |  |  |  | ▨ |
|  | 4 |  |  |  |  |  |  | ▨ |
|  | 3 |  |  |  |  |  |  | ▨ |
|  | 2 |  |  |  |  |  |  | ▨ |
|  | 1 |  |  |  |  |  |  | ▨ |
|  | 0 |  |  |  |  |  |  | ▨ |

FIG. 7a

|  |  | 0 | 1 | ... | 10 | 11 | 12 | 13 |
|---|---|---|---|---|---|---|---|---|
| RE | 11 |  |  |  |  |  |  | ▨ |
|  | 10 |  |  |  |  |  |  | ▨ |
|  | 9 |  |  |  |  |  |  | ▨ |
|  | 8 |  |  |  |  |  |  | ▨ |
|  | 7 |  |  |  |  |  |  | ▨ |
|  | 6 |  |  |  |  |  |  | ▨ |
|  | 5 |  |  |  |  |  |  | ▨ |
|  | 4 |  |  |  |  |  |  | ▨ |
|  | 3 |  |  |  |  |  |  | ▨ |
|  | 2 |  |  |  |  |  |  | ▨ |
|  | 1 |  |  |  |  |  |  | ▨ |
|  | 0 |  |  |  |  |  |  | ▨ |

FIG. 7b

|  |  | 0 | 1 | ... | 10 | 11 | 12 | 13 |
|---|---|---|---|---|---|---|---|---|
| RE | 11 |  |  |  |  |  |  | ⊞ |
|  | 10 |  |  |  |  |  |  | ⊠ |
|  | 9 |  |  |  |  |  |  | ▨ |
|  | 8 |  |  |  |  |  |  | ▨ |
|  | 7 |  |  |  |  |  |  | ⊞ |
|  | 6 |  |  |  |  |  |  | ⊠ |
|  | 5 |  |  |  |  |  |  | ▨ |
|  | 4 |  |  |  |  |  |  | ▨ |
|  | 3 |  |  |  |  |  |  | ⊞ |
|  | 2 |  |  |  |  |  |  | ⊠ |
|  | 1 |  |  |  |  |  |  | ▨ |
|  | 0 |  |  |  |  |  |  | ▨ |

FIG. 7c

FIG. 8a

FIG. 8b

Aggressor base station

Victim base station

FIG. 9

| | | 0 | 1 | ... | 10 | 11 | 12 | 13 |
|---|---|---|---|---|---|---|---|---|
| RE | 11 | | | | | | | |
| | 10 | | | | | | | |
| | 9 | | | | | | | |
| | 8 | | | | | | | | ▓ |
| | 7 | | | | | | | |
| | 6 | | | | | | | |
| | 5 | | | | | | | |
| | 4 | | | | | | | | ▓ |
| | 3 | | | | | | | |
| | 2 | | | | | | | |
| | 1 | | | | | | | |
| | 0 | | | | | | | | ▓ |

FIG. 10

Acquiring first configuration information of a measurement signal, which indicates a first position of the measurement signal in time domain resource and frequency domain resource — S111

Transmitting the measurement signal to the victim base station at the first position — S112

FIG. 11

Acquiring first configuration information of an aggressor base station, which indicates a first position of the measurement signal in time domain resource and frequency domain resource, the measurement signal is used for measuring the CLI value — S121

Transmitting the first configuration information of the aggressor base station to the victim base station — S122

FIG. 12

131 — First receiving unit
132 — Measuring unit

FIG. 13

141 — Acquiring unit
142 — First transmission unit

FIG. 14

151 — Acquiring unit
152 — First transmission unit

FIG. 15

Memory 161

164

Memory 163

Communication interface 162

FIG. 16

Processor 171

174

Memory 173

Communication interface 172

FIG. 17

**INTERNATIC**

| | International application No. |
|---|---|
| | **PCT/CN2023/075518** |

| A. | CLASSIFICATION OF SUBJECT MATTER |
|---|---|
| | H04W 24/08(2009.01)i |

According to International Patent Classification (IPC) or to both national classification and IPC

| B. | FIELDS SEARCHED |
|---|---|

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

3GPP, CNTXT, DWPI, ENTXTC: 干扰, 攻击, 基站, 灵活时分双工, 受害, 受害基站, aggressor, CLI, eNB, FTDD, gNB, victim, flexible time division duplex, F-TDD

| C. | DOCUMENTS CONSIDERED TO BE RELEVANT | |
|---|---|---|
| Category* | Citation of document, with indication, where appropriate, of the relevant passages | Relevant to claim No. |
| X | US 2021321417 A1 (LG ELECTRONICS INC.) 14 October 2021 (2021-10-14) description, paragraphs 0235-0446 | 1, 54, 109 |
| Y | US 2021321417 A1 (LG ELECTRONICS INC.) 14 October 2021 (2021-10-14) description, paragraphs 0235-0446 | 2-53, 55-108 |
| Y | CN 112055992 A (QUALCOMM INC.) 08 December 2020 (2020-12-08) see description, paragraphs 0006-0247 | 2-53, 55-108 |
| A | CN 102833793 A (HUAWEI TECHNOLOGIES CO., LTD.) 19 December 2012 (2012-12-19) entire document | 1-109 |
| A | US 2023040309 A1 (QUALCOMM INCORPORATED) 09 February 2023 (2023-02-09) entire document | 1-109 |
| A | MODERATOR (LG ELECTRONICS). "3GPP TSG RAN WG1 #109-e R1-2205374" *Summary #4 of [109-e-R18-Duplex-04] Email discussion on dynamic/flexible TDD,* 20 May 2022 (2022-05-20), entire document | 1-109 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 October 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 611 425 A1

INTERNATIO

| International application No. |
|---|
| **PCT/CN2023/075518** |

## C. DOCUMENTS CONSIDERED TO BE RELEVANT

| Category* | Citation of document, with indication, where appropriate, of the relevant passages | Relevant to claim No. |
|---|---|---|
| A | LG ELECTRONICS. "3GPP TSG RAN WG1 Meeting #94 R1-1808530" *Discussions on Procedure for NR RIM Support*, 24 August 2018 (2018-08-24), entire document | 1-109 |

Form PCT/ISA/210 (second sheet) (July 2022)

52

INTERNATIC
**Information** on patent family members

| International application No. |
| PCT/CN2023/075518 |

| Patent document cited in search report | | | Publication date (day/month/year) | Patent family member(s) | | | Publication date (day/month/year) |
|---|---|---|---|---|---|---|---|
| US | 2021321417 | A1 | 14 October 2021 | WO | 2020032666 | A1 | 13 February 2020 |
| CN | 112055992 | A | 08 December 2020 | EP | 3788827 | A1 | 10 March 2021 |
| | | | | US | 2019342057 | A1 | 07 November 2019 |
| | | | | WO | 2019213267 | A1 | 07 November 2019 |
| CN | 102833793 | A | 19 December 2012 | WO | 2012171498 | A1 | 20 December 2012 |
| | | | | EP | 2712231 | A1 | 26 March 2014 |
| | | | | US | 2014106769 | A1 | 17 April 2014 |
| US | 2023040309 | A1 | 09 February 2023 | EP | 4133856 | A1 | 15 February 2023 |
| | | | | WO | 2021203339 | A1 | 14 October 2021 |
| | | | | WO | 2021204240 | A1 | 14 October 2021 |
| | | | | CN | 115316019 | A | 08 November 2022 |

Form PCT/ISA/210 (patent family annex) (July 2022)